# EUROPÄISCHE PATENTSCHRIFT

(11) **EP 3 121 035 B1**
(45) Veröffentlichungstag und Bekanntmachung des Hinweises auf die Patenterteilung: **20.03.2019**
(21) Anmeldenummer: 16180169.1
(22) Anmeldetag: 19.07.2016
(51) Int. Cl.: B60G 9/00, B60G 11/18, B60G 3/14, B60G 15/06, B60G 21/05

(54) **ACHSVORRICHTUNG**
AXLE DEVICE
DISPOSITIF D'ESSIEU

(30) Priorität: 24.07.2015 DE 102015112161
(43) Veröffentlichungstag der Anmeldung: 25.01.2017
(73) Patentinhaber: FGS GmbH - Fahrzeug - und AI-Systeme, 78355 Hohenfels - Selgetsweiler (DE)
(72) Erfinder: Schmid, Fritz, 88662 Überlingen (DE)
(74) Vertreter: Daub, Thomas

(56) Entgegenhaltungen:
- WO-A1-02/22384
- DE-A1- 1 780 130
- DE-A1-102009 040 204
- DE-C1- 3 535 589
- FR-A1- 2 154 297
- FR-A1- 2 544 259
- FR-A1- 2 805 776
- FR-A1- 2 840 561
- FR-A1- 2 902 698
- US-A- 3 601 426
- US-A1- 2014 131 969

## Beschreibung

### Stand der Technik

Die Erfindung betrifft eine Achsvorrichtung für ein Fahrzeug nach dem Oberbegriff des Anspruchs 1.

Aus der FR 2 902 698 A1, der FR 2 805 776 A1, der US 3 601 426 A und der WO 02/22384 A1 sind jeweils bereits Achsvorrichtungen für Fahrzeuge bekannt, mit zumindest einer Achse, die zumindest zwei Längslenker umfasst, die jeweils zu einer Lagerung eines Laufrads vorgesehen sind, sowie zumindest zwei Achselemente, die jeweils drehfest mit einem der Längslenker verbunden sind. Die FR 2 902 698 A1 offenbart den Oberbegriff des Anspruchs 1.

Die Aufgabe der Erfindung besteht insbesondere darin, eine besonders kompakte Achsvorrichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Achsvorrichtung für ein Fahrzeug, insbesondere für ein Straßenfahrzeug, und ganz besonders bevorzugt für Kraftfahrzeuge zur Güterbeförderung, insbesondere mit einer zulässigen Gesamtmasse über 1 Tonne, und für Anhänger, einschließlich Sattelanhänger, insbesondere mit einer Gesamtmasse über 0,75 Tonnen, mit zumindest einer Achse, die zumindest zwei Längslenker umfasst, die jeweils zu einer Lagerung eines Laufrads vorgesehen sind, sowie zumindest zwei Achselemente, die jeweils drehfest mit einem der Längslenker verbunden sind.

Es wird vorgeschlagen, dass die Achse zumindest eine Lagereinheit aufweist, die axial zwischen den Achselementen angeordnet ist. Dadurch kann eine besonders leichte Achsvorrichtung bereitgestellt werden. Es kann ein besonders kompakter Aufbau der Achsvorrichtung erreicht werden. Es kann eine große Zahl von Gleichteilen erreicht werden, wodurch eine besonders kostengünstige Achsvorrichtung bereitgestellt werden kann. Es kann eine besonders servicefreundliche Achsvorrichtung bereitgestellt werden. Es kann eine besonders kostengünstige Montage der Achsvorrichtung erreicht werden.

Unter einem "Achselement" soll in diesem Zusammenhang insbesondere ein Element verstanden werden, das dazu vorgesehen ist, eine Last, insbesondere aufgrund einer Gewichtskraft auf ein Laufrad zu übertragen und/oder ein von dem Längslenker erzeugtes Drehmoment aufzunehmen. Bevorzugt ist das Achselement drehbar gelagert und weist eine Drehachse auf, die zumindest im Wesentlichen parallel zu einer Drehachse des Laufrads ausgerichtet ist. Bevorzugt weist das Achselement eine Haupterstreckungsrichtung auf, die zumindest im Wesentlichen parallel zu der Drehachse ausgerichtet ist. Vorzugsweise ist das Achselement zylindrisch ausgebildet und/oder weist zumindest einen zylindrischen Abschnitt auf. Es ist denkbar, dass das Achselement rohrförmig ausgebildet ist, und/oder zumindest einen rohrförmig ausgebildeten Abschnitt aufweist. Vorzugsweise sind die Achselemente der Achse analog zueinander ausgebildet. Dadurch kann ein besonders einfacher Aufbau der Achsvorrichtung erreicht werden. Bevorzugt weisen die Achselemente der Achse zumindest einen gleichen Außendurchmesser und/oder einen gleichen Innendurchmesser auf. Alternativ können die Achselemente unterschiedliche Außendurchmesser und/oder unterschiedliche Innendurchmesser aufweisen. Es ist denkbar, dass die Achselemente der Achse eine gleiche Länge in der Haupterstreckungsrichtung aufweisen. Alternativ können die Achselemente der Achse unterschiedliche Längen in der jeweiligen Haupterstreckungsrichtung aufweisen. Vorzugsweise sind die Achselemente in einem montierten Zustand in axialer Richtung fluchtend zueinander angeordnet. Bevorzugt sind die Achselemente in axialer Richtung beabstandet zueinander angeordnet. Es ist auch denkbar, dass die Achselemente in axialer Richtung überlappend angeordnet sind. Unter "zwischen" soll in diesem Zusammenhang insbesondere räumlich zwischen und/oder wirkungsmäßig zwischen verstanden werden. Vorzugsweise ist die zumindest eine Lagereinheit dazu vorgesehen, zumindest eines der Achselemente schwenkbar und/oder drehbar zu lagern. Bevorzugt ist die zumindest eine Lagereinheit dazu vorgesehen, die Achselemente schwenkbar und/oder drehbar gegeneinander zu lagern. Unter "axial" soll in diesem Zusammenhang insbesondere in Richtung einer Drehachse und/oder in Richtung einer zumindest im Wesentlichen parallel zu einer Seitenfläche verlaufenden Haupterstreckung verstanden werden. Unter "fluchtend" soll insbesondere verstanden werden, dass ein erstes Bauteil ausgehend von einem fiktiven Punkt und/oder einem zweiten Bauteil perspektivisch sowohl in Bezug auf eine ausgezeichnete Richtung, wie insbesondere eine Drehachse, eine Bewegungsrichtung und/oder eine Haupterstreckungsrichtung, als auch in Bezug auf eine räumliche Positionierung mit dem fiktiven Punkt und/oder dem zweiten Bauteil übereinstimmt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer vorteilhaften Ausgestaltung weist die Achsvorrichtung zumindest ein Zugelement auf, das dazu vorgesehen ist, eine zumindest im Wesentlichen axial gerichtete Zugkraft zwischen den Achselementen bereitzustellen. Dadurch kann eine konstruktiv einfache und/oder robuste Achsvorrichtung bereitgestellt werden. Es kann ein besonders geringer Wartungsaufwand erreicht werden. Das Zugelement weist beispielsweise zumindest eine Stange, einen Draht, ein Band, eine Kette und/oder ein Seil auf. Es ist denkbar, dass das Zugelement ein anderes dem Fachmann als sinnvoll erscheinendes langgestrecktes Element aufweist. Vorzugsweise ist das Zugelement als ein zumindest in einem entspannten Zustand biegbares Zugelement ausgebildet. Bevorzugt ist das Zugelement als ein Seil, insbesondere als ein Drahtseil ausgebildet. Unter einer "Zugkraft zwischen" zwei Elementen soll in diesem Zusammenhang insbesondere eine Kraft verstanden werden, die darauf gerichtet ist, die Elemente aufeinander zuzubewegen und/oder aufeinanderzupressen. Vorzugsweise ist das Zugelement elastisch ausgebildet. Bevorzugt ist die Zugkraft als eine Spannkraft des Zugelements ausgebildet. Es ist denkbar, dass die Achsvorrichtung eine Einstelleinheit aufweist, die dazu vorgesehen ist, die Zugkraft, insbesondere eine Spannkraft des Zugelementes, einzustellen.

Ferner wird vorgeschlagen, dass die Lagereinheit zumindest ein Lager aufweist, das dazu vorgesehen ist, zumindest eines der Achselemente drehbar zu lagern und die Zugkraft des Zugelements zumindest im Wesentlichen aufzunehmen. Dadurch kann ein besonders vorteilhaft kleines Lagerspiel einer Lagerung der Achselemente erreicht werden. Unter einem "Lager" soll in diesem Zusammenhang insbesondere ein Rotationslager verstanden werden. Vorzugsweise ist das Lager als ein Wälzlager, beispielsweise ein Kugellager, ein Nadellager, ein Rollenlager oder ein Kegelrollenlager ausgebildet. Es ist denkbar, dass das Lager einen anderen dem Fachmann geeignet erscheinenden Aufbau aufweist und beispielsweise als ein Gleitlager ausgebildet ist.

In einer weiteren Ausgestaltung der Erfindung wird vorgeschlagen, dass die Lagereinheit zumindest ein Lager aufweist, das als Schräglager ausgebildet ist, und ganz besonders vorteilhaft als Doppelreihenschräglager. Dadurch kann eine besonders zuverlässige Führung der Achselemente relativ zueinander erreicht werden und es können Kräfte vorteilhaft abgestützt werden. Es kann eine besonders einfache Einstellung eines Lagerspiels erreicht werden. Unter einem "Schräglager" soll in diesem Zusammenhang insbesondere ein Lager mit einer Drehachse verstanden werden, das dazu vorgesehen ist, eine Kraft aufzunehmen, die im Wesentlichen quer zu der Drehachse und im Wesentlichen quer zu einer Ebene senkrecht zu der Drehachse ausgerichtet ist. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8 Grad, vorteilhaft kleiner als 5 Grad und besonders vorteilhaft kleiner als 2 Grad aufweist. Vorzugsweise weist das Lager zumindest eine Lagerfläche auf, deren Normalenrichtung mit der Drehachse des Lagers zumindest im Wesentlichen überall einen spitzen Winkel einschließt. Unter einer "Lagerfläche" soll in diesem Zusammenhang insbesondere eine Roll- und/oder Gleitfläche des Lagers verstanden werden, welche zumindest in einem Betriebszustand eine Rotationsbewegung zweier zu lagernder Teile zueinander ermöglicht. Unter "zumindest im Wesentlichen überall" soll in diesem Zusammenhang insbesondere auf wenigstens 70 Prozent der Fläche, vorzugsweise auf wenigstens 85 Prozent der Fläche und bevorzugt auf wenigstens 98 Prozent der Fläche verstanden werden.

Erfindungsgemäß wird vorgeschlagen, dass die Lagereinheit eine Spanneinheit aufweist, die dazu vorgesehen ist, die Achselemente und/oder Lager der Lagereinheit zu verspannen, wodurch eine besonders robuste und stabile Konstruktion erreicht werden kann. Unter einer "Spanneinheit" soll dabei insbesondere eine Einheit verstanden werden, mittels deren eine Spannkraft erzeugt werden kann, und zwar insbesondere in der Art, dass zumindest zwei Bauteile miteinander mit einer Spannkraft verspannt werden können.

Weist die Spanneinheit wenigstens ein Spannelement auf, das in einem Koppelbereich der Achselemente angeordnet ist, kann die Spanneinheit besonders Platz sparend, insbesondere Platz sparend zumindest teilweise innerhalb zumindest eines Achselements, integriert werden. Dabei soll unter "in einem Koppelbereich der Achselemente angeordnet" insbesondere verstanden werden, dass das Spannelement zumindest einen kürzesten Abstand, insbesondere parallel zu den Achselementen, von einer Ebene aufweist, die senkrecht zur Längsrichtung der Achselemente verläuft und in der zumindest ein dem Koppelbereich zugewandtes freies Ende eines der Achselemente liegt, wobei der Abstand kleiner ist als ein kürzester Abstand, insbesondere parallel zu den Achselementen, von einer Ebene, die senkrecht zur Längsrichtung der Achselemente verläuft und in der zumindest ein dem Koppelbereich abgewandtes freies Ende eines der Achselemente liegt. Besonders vorteilhaft weist das Spannelement einen kürzesten Abstand von einem dem Koppelbereich zugewandten freien Ende eines der Achselemente auf, der kleiner ist als 50% einer Gesamtlänge des Achselements und insbesondere kleiner ist als 30% der Gesamtlänge des Achselements. Ferner soll unter einem "Koppelbereich der Achselemente" insbesondere ein Bereich verstanden werden, in dem in Längsrichtung betrachtet beide den Längslenkern abgewandten Enden der Achselemente angeordnet sind und der einen Abstand zu den den Längslenkern zugewandten Enden der Achselemente aufweist, und zwar insbesondere von zumindest 10% einer Gesamtlänge eines der Achselemente und vorteilhaft von zumindest 20% einer Gesamtlänge eines der Achselemente. Ferner soll unter einem "Spannelement" insbesondere ein Element verstanden werden, das dazu vorgesehen ist, eine Spannkraft zu erzeugen, wie beispielsweise mittels eines Hebelmechanismus, mittels eines Kurvengetriebes und/oder mittels eines Gewindes usw.

Ferner wird vorgeschlagen, dass das wenigstens eine Spannelement zumindest ein Gewinde aufweist, wodurch konstruktiv einfach Spannkräfte erzeugt werden können. Das Gewinde kann dabei als ein Innengewinde und/oder vorteilhaft als ein Außengewinde ausgebildet sein.

Erfindungsgemäß wird vorgeschlagen, dass die Spanneinheit einen Innenbolzen aufweist, wodurch wiederum eine vorteilhaft Platz sparende Integration erreicht werden kann. Dabei soll unter einem "Innenbolzen
insbesondere ein Element verstanden werden, das dazu vorgesehen ist, bei der Montage zumindest teilweise in einen Hohlraum eines Elements, wie insbesondere in einen Hohlraum eines Achselements, eingeführt zu werden.

Der Innenbolzen ist vorzugsweise mit einem der Achselemente drehfest verbunden, wodurch einfach vorteilhafte Kraftverläufe sichergestellt werden können.

Erfindungsgemäß ist zumindest ein Lager der Lagereinheit zumindest teilweise auf dem Innenbolzen angeordnet, wodurch die Lagereinheit und insbesondere zumindest eines von deren Lagern konstruktiv einfach innerhalb der Achselemente angeordnet werden kann.

Erfindungsgemäß wird vorgeschlagen, dass der Innenbolzen ein im Koppelbereich der Achselemente angeordnetes Gewinde aufweist, über das zumindest ein Lager der Lagereinheit und/oder die Achselemente verspannbar sind, wodurch eine einfache und kostengünstige Konstruktion erreicht werden kann. Der Innenbolzen bildet vorzugsweise zumindest teilweise das Spannelement der Spanneinheit, das im Koppelbereich der Achselemente angeordnet ist.

In einer vorteilhaften Ausgestaltung durchsetzt das Zugelement zumindest eines der Achselemente in axialer Richtung. Dadurch kann das Zugelement besonders zuverlässig vor Umwelteinflüssen geschützt werden. Es kann ein geringer Bauraumbedarf erreicht werden. Unter "axial durchsetzen" soll in diesem Zusammenhang insbesondere verstanden werden, dass ein Element zumindest an einem Querschnitt, der senkrecht zu der axialen Richtung angeordnet ist, vorzugsweise in einem axialen Bereich, radial zumindest im Wesentlichen vollständig innerhalb eines weiteren Elements angeordnet ist. Vorzugsweise durchsetzt das Zugelement zumindest eines der Achselemente zumindest auf einer Länge, die 50 Prozent einer Haupterstreckung des Achselements entspricht, bevorzugt auf einer Länge die 80 Prozent einer Haupterstreckung des Achselements entspricht, besonders bevorzugt auf einer Länge die 90 Prozent einer Haupterstreckung des Achselements entspricht, und ganz besonders bevorzugt auf einer Länge, die 99 Prozent einer Haupterstreckung des Achselements entspricht. Vorzugsweise durchsetzt das Zugelement beide Achselemente.

Ferner wird vorgeschlagen, dass die Achsvorrichtung zumindest eine Lagerstelle zu einer direkten Lagerung eines ersten der Achselemente und zumindest eine weitere Lagerstelle zu einer direkten Lagerung eines weiteren der Achselemente. Dadurch kann eine zuverlässige Lagerung der Achselemente erreicht werden. Es kann ein besonders hoher Fahrkomfort erreicht werden. Unter einer "direkten Lagerung" soll in diesem Zusammenhang insbesondere verstanden werden, dass in einem montierten Zustand ein zu lagerndes Element und ein Lager miteinander in Kontakt sind. Vorzugsweise weist die Lagerstelle eine axiale Erstreckung von weniger als 180 mm, bevorzugt von weniger als 120 mm und besonders bevorzugt von weniger als 90 mm auf.

In einer vorteilhaften Weise sind die Lagerstelle und die zumindest eine weitere Lagerstelle dazu vorgesehen, die Achselemente unabhängig voneinander zu lagern. Dadurch sind die Achselemente gegeneinander verdrehbar. Es kann ein besonders guter Kontakt zwischen einer Fahrbahn und dem Fahrzeug erreicht werden. Es kann ein besonders sicher betreibbares Fahrzeug bereitgestellt werden. Laufräder können nach dem Prinzip einer Einzelradaufhängung gelagert werden. Es kann ein hoher Fahrkomfort erreicht werden. Unter "unabhängig voneinander lagern" soll in diesem Zusammenhang insbesondere verstanden werden, dass eine Drehbewegung an den Lagerstellen zumindest im Wesentlichen voneinander entkoppelt sind. Insbesondere weisen die Lagerstellen jeweils Lager auf, die zumindest im Wesentlichen drehmomentübertragungsfrei voneinander ausgebildet sind.

Ferner wird vorgeschlagen, dass die Achsvorrichtung eine zweite Achse aufweist, die zumindest zwei Längslenker umfasst, die jeweils zu einer Lagerung eines Laufrads vorgesehen sind, sowie zumindest zwei Achselemente, die jeweils drehfest mit einem der Längslenker verbunden sind, wobei die Achse eine Lagereinheit aufweist, die axial zwischen den Achselementen der jeweiligen Achse angeordnet ist. Dadurch kann eine Achsvorrichtung für besonders große Lasten bereitgestellt werden. Es kann eine besonders vielseitig einsetzbare Achsvorrichtung bereitgestellt werden.

Ferner wird vorgeschlagen, dass die Achsvorrichtung zumindest eine Pleueleinheit aufweist, die dazu vorgesehen ist, eine Schwenkbewegung zumindest eines der Achselemente gefedert und/oder gedämpft mit zumindest einer weiteren Einheit zu koppeln, wodurch eine vorteilhaft stabile Lagerung der Längslenker und damit der Laufräder erreicht werden kann. Insbesondere ist die Pleueleinheit dabei dazu vorgesehen, die Schwenkbewegungen gedämpft abzufedern. Dabei können verschiedene, dem Fachmann als sinnvoll erscheinende Dämpfer und/oder Federelemente eingesetzt werden, wie beispielsweise Gasdämpfer, Öldämpfer, Schraubenfedern, Blattfedern usw.

In einer vorteilhaften Ausgestaltung weist die Achsvorrichtung zumindest eine elastisch verformbares Pleueleinheit auf, die dazu vorgesehen ist, eine Schwenkbewegung eines der Achselemente einer ersten der Achsen mit einer Schwenkbewegung eines der Achselemente einer weiteren Achse zu koppeln. Dadurch können Stöße, die bei einer Fahrt auf die Längslenker einwirken, besonders wirkungsvoll gedämpft werden. Es kann eine anwenderspezifische Federeinstellung ermöglicht werden. Eine Ruhelage der Achselemente kann besonders einfach eingestellt werden. Unter einem "verformbaren Pleuelelement" soll in diesem Zusammenhang insbesondere ein Pleuelelement verstanden werden, das, insbesondere bezogen auf eine Haupterstreckungsrichtung, verkürzbar und/oder verlängerbar ist.

Ferner wird vorgeschlagen, dass die zumindest eine Pleueleinheit zumindest ein Rückstellelement aufweist, das dazu vorgesehen ist, einer Verformung der Pleueleinheit entgegenzuwirken. Dadurch kann ein Abheben der Laufräder von einer Fahrbahn besonders wirkungsvoll verhindert werden. Eine Sicherheit beim Betrieb des Fahrzeugs kann weiter erhöht werden. Unter einer "Verformung" soll in diesem Zusammenhang insbesondere eine Längenänderung, insbesondere bezogen auf eine Haupterstreckungsrichtung, verstanden werden. Vorzugsweise ist das Rückstellelement als eine Schraubenfeder ausgebildet. Es ist denkbar, dass das Rückstellelement als ein anderes dem Fachmann geeignet erscheinendes elastisches Element ausgebildet ist, beispielsweise als ein Kunststoffelement oder eine Gasfeder.

Ferner wird ein Fahrzeug, insbesondere ein Straßenfahrzeug, mit zumindest einer erfindungsgemäßen Achsvorrichtung vorgeschlagen. Dadurch kann ein Fahrzeug mit einem besonders hohen Benutzerkomfort bereitgestellt werden. Es kann ein Fahrzeug mit einem besonders großen Nutzlastvolumen und/oder einer besonders großen Nutzlastmasse bereitgestellt werden.

Die erfindungsgemäße Achsvorrichtung soll hierbei nicht auf die oben beschriebene Anwendung und Ausführungsform beschränkt sein. Insbesondere kann die erfindungsgemäße Achsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung.

Es zeigen:
- Fig. 1: eine perspektivische Ansicht eines Fahrzeugs mit einer erfindungsgemäßen Achsvorrichtung,
- Fig. 2: eine perspektivische Ansicht der Achsvorrichtung,
- Fig. 3: eine Aufsicht auf die Achsvorrichtung,
- Fig. 4: eine teilgeschnittene Ansicht einer ersten Achse der Achsvorrichtung entlang einer Drehachse der Achse,
- Fig. 5: eine Schnittansicht einer Lagereinheit der Achse,
- Fig. 6: eine Schnittansicht der Lagereinheit entlang einer Ebene senkrecht zu der Drehachse der Achse,
- Fig. 7: eine perspektivische Ansicht einer Achse eines weiteren Ausführungsbeispiels,
- Fig. 8: eine perspektivische Ansicht einer alternativen Achsvorrichtung und
- Fig. 9: einen Längsschnitt durch einen Koppelbereich von Achselementen der Achsvorrichtung aus Fig. 8.

### Beschreibung der Ausführungsbeispiele

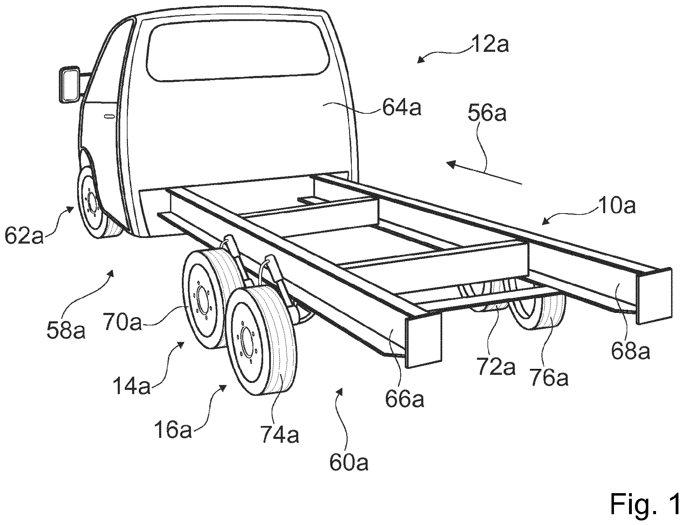

Figur 1 zeigt ein Fahrzeug 12a, das bezogen auf eine Hauptfahrtrichtung 56a einen vorderen Fahrzeugabschnitt 58a und einen hinteren Fahrzeugabschnitt 60a aufweist. Das Fahrzeug 12a ist in dem vorliegenden Ausführungsbeispiel als ein Landfahrzeug ausgebildet. Das Fahrzeug 12a ist in dem vorliegenden Ausführungsbeispiel als ein Straßenfahrzeug ausgebildet. Das Fahrzeug 12a ist als ein Nutzfahrzeug ausgebildet. Das Fahrzeug 12a ist als ein Lastkraftwagen zur Güterbeförderung mit einer zulässigen Gesamtmasse über 1 Tonne ausgebildet, könnte jedoch entsprechend auch von einem Anhänger mit einer zulässigen Gesamtmasse über 0,75 Tonnen, vorzugsweise über 3,5 Tonnen, gebildet sein. Der vordere Fahrzeugabschnitt 58a umfasst eine Antriebseinheit mit einer antreibbaren und lenkbaren Achse 62a und eine Fahrzeugführerkabine 64a. Der hintere Fahrzeugabschnitt 60a umfasst einen Lastrahmen mit zwei Längsträgern 66a, 68a. Die Längsträger 66a, 68a sind parallel zu der Hauptfahrtrichtung 56a angeordnet. Die Längsträger 66a, 68a sind bezogen auf eine mittig parallel zu der Hauptfahrtrichtung 56a angeordnete Ebene spiegelbildlich angeordnet. Der hintere Fahrzeugabschnitt 60a weist in dem vorliegenden Ausführungsbeispiel eine Achsvorrichtung 10a mit zwei Achsen 14a, 16a auf. Die Achsen 14a, 16a sind als nicht-angetriebene Achsen 14a, 16a ausgebildet. Die Achsen 14a, 16a sind zumindest im Wesentlichen parallel zueinander angeordnet. Die Achsen 14a, 16a sind in der Hauptfahrtrichtung 56a parallel versetzt zueinander angeordnet. Die Achsvorrichtung 10a weist ein Achstandem auf. Es ist denkbar, dass die Achsvorrichtung 10a eine von zwei verschiedene Anzahl von Achsen, beispielsweise eine oder drei Achsen aufweist. Die Längsträger 66a, 68a sind dazu vorgesehen, ein Gewicht einer nicht näher dargestellten Nutzlast insbesondere auf die Achsen 14a, 16a der Achsvorrichtung 10a zu übertragen. Die Längsträger 66a, 68a sind fest mit dem vorderen Fahrzeugabschnitt 60a verbunden. Die Längsträger 66a, 68a sind fest mit einer Trageinheit des vorderen Fahrzeugabschnitts 58a verbunden. Der hintere Fahrzeugabschnitt 60a weist in dem vorliegenden Ausführungsbeispiel vier Laufräder 70a, 72a, 74a, 76a auf. Es ist denkbar, dass der hintere Fahrzeugabschnitt 60a eine andere Anzahl von Laufrädern, beispielsweise zwei oder sechs Laufräder aufweist.

Eine erste der Achsen 14a und eine weitere der Achsen 16a sind in Hinsicht auf die im Folgenden beschriebenen Merkmale analog zueinander ausgebildet, weshalb nur die erste der Achsen 14a näher beschrieben wird. Die Achse 14a ist in dem vorliegenden Ausführungsbeispiel als nicht-lenkbare Achse 14a ausgebildet. Die Achse 14a ist zu einer Lagerung von zwei Laufrädern 70a, 72a vorgesehen, die an einander abgewandten Seiten des Fahrzeugs 12a angeordnet sind. Die Laufräder 70a, 72a sind in einem montierten Zustand an einander abgewandten Seiten der Achse 14a angeordnet. Die Achse 14a ist räumlich zwischen einer Fahrbahnebene und den Längsträgern 66a, 68a des Fahrzeugs 12a angeordnet. Die Achse 14a weist eine Drehachse 78a auf, die zumindest im Wesentlichen senkrecht zu der Hauptfahrtrichtung 56a ausgerichtet ist. Die Achse 14a ist dazu vorgesehen, insbesondere ein Gewicht der Nutzlast und/oder des Fahrzeugs 12a von den Längsträgern 66a, 68a auf die an der Achse 14a gelagerten Laufräder 70a, 72a zu übertragen. Die Laufräder 70a, 72a sind dazu vorgesehen, insbesondere ein Gewicht der Nutzlast und/oder des Fahrzeugs 12a auf eine Fahrbahn zu übertragen.

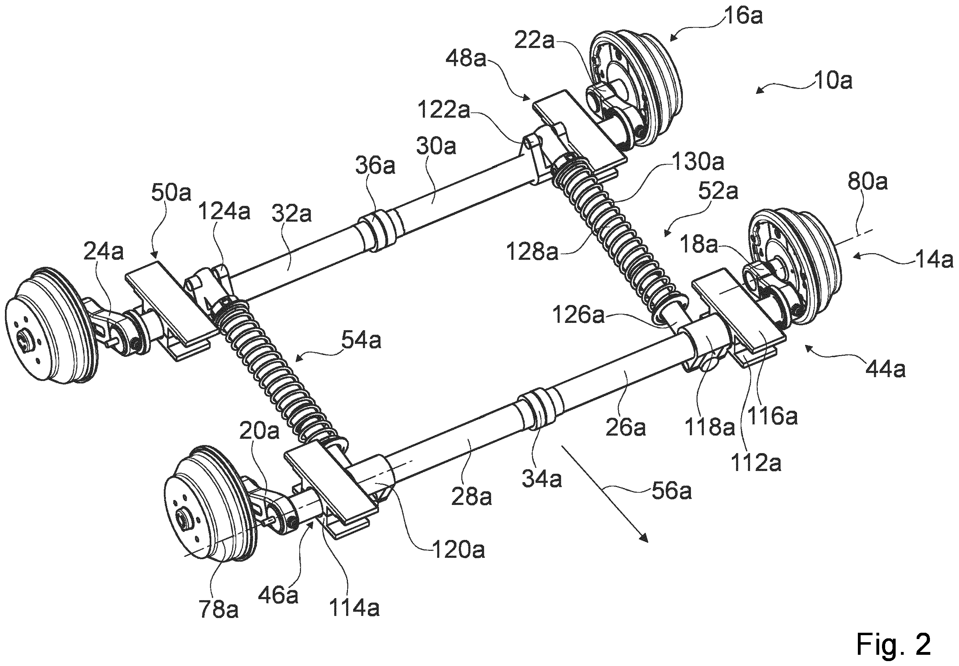

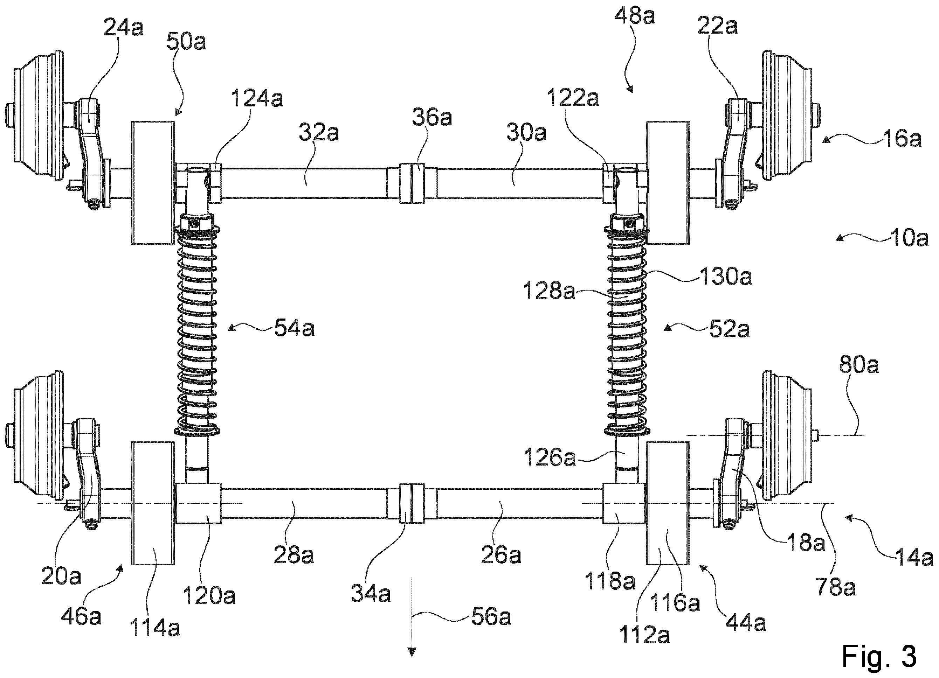

Die erste Achse 14a weist zwei Längslenker 18a, 20a auf, die jeweils zu einer Lagerung eines der Laufräder 70a, 72a des Fahrzeugs 12a vorgesehen sind (vgl. Figur 2 und Figur 3). Analog weist die weitere Achse 14a der Achsvorrichtung 10a zwei Längslenker 22a, 24a auf, die jeweils zu einer Lagerung eines der Laufräder 74a, 76a des Fahrzeugs 12a vorgesehen sind. Die Längslenker 18a, 20a der ersten Achse 14a sind an zwei voneinander abgewandten Seiten der Achse 14a angeordnet. Ein erster der Längslenker 18a ist bezogen auf die Hauptfahrtrichtung 56a des Fahrzeugs 12a links von einer Achsmitte angeordnet. Ein weiterer der Längslenker 20a ist bezogen auf die Hauptfahrtrichtung 56a des Fahrzeugs 12a rechts von der Achsmitte angeordnet.

Die Längslenker 18a, 20a sind analog zueinander ausgebildet, weshalb im Folgenden nur der erste der Längslenker 18a näher beschrieben wird. Der erste Längslenker 18a ist langgestreckt ausgebildet und weist bezogen auf eine Haupterstreckungsrichtung zwei voneinander abgewandte Enden auf. Der Längslenker 18a ist an einem ersten der Enden schwenkbar bezogen auf die Drehachse 78a der Achse 14a gelagert. Der Längslenker 18a weist einen Drehpunkt auf, der auf der Drehachse 78a der Achse 14a angeordnet ist. Das an dem Längslenker 18a gelagerte Laufrad 70a weist eine Drehachse 80a auf. Die Drehachse 80a des Laufrads 70a ist an einem weiteren der Enden des Längslenkers 18a angeordnet. Die Drehachse 80a des Laufrads 70a und der Drehpunkt des Längslenkers 18a sind beabstandet voneinander angeordnet. Der Längslenker 18a ist dazu vorgesehen, zu einer Änderung eines Abstands zwischen dem an dem Längslenker 18a gelagerten Laufrad 70a und den Längsträgern 66a, 68a geschwenkt zu werden.

Die Achse 14a umfasst zwei Achselemente 26a, 28a, die jeweils drehfest mit einem der Längslenker 18a, 20a verbunden sind. Analog umfasst die weitere Achse 16a zwei Achselemente 30a, 32a. Je eines der Achselemente 26a, 28a ist jeweils einem der Längslenker 18a, 20a zugeordnet. Die Achselemente 26a, 28a der ersten Achse 14a weisen eine Haupterstreckung in Richtung der Drehachse 80a der Achse 14a auf. Die Achselemente 26a, 28a sind fluchtend zueinander angeordnet. Die Achselemente 26a, 28a sind kolinear zueinander angeordnet. Die Achselemente 26a, 28a sind zu einer Drehung um die Drehachse 78a der Achse 14a vorgesehen. Die Achselemente 26a, 28a weisen in dem vorliegenden Ausführungsbeispiel eine gleiche axiale Erstreckung auf. Es ist denkbar, dass die Achselemente 26a, 28a eine unterschiedliche axiale Erstreckung aufweisen. Ein erstes der Achselemente 26a ist bezogen auf die Hauptfahrtrichtung 56a des Fahrzeugs 12a links von der Achsmitte angeordnet. Ein weiteres der Achselemente 28a ist bezogen auf die Hauptfahrtrichtung 56a des Fahrzeugs 12a rechts von der Achsmitte angeordnet. In dem vorliegenden Ausführungsbeispiel sind die Achselemente 26a, 28a analog zueinander ausgebildet, weshalb im Folgenden nur das erste der Achselemente 26a näher beschrieben wird.

Das Achselement 26a ist in dem vorliegenden Ausführungsbeispiel formschlüssig mit dem ihm zugeordneten Längslenker 18a verbunden. Das Achselement 26a und der Längslenker 18a sind mittels eines Bolzens miteinander verbunden. Das Achselement 26a und der Längslenker 18a sind miteinander verschraubt. Es ist denkbar, dass das Achselement 26a und der Längslenker 18a auf eine andere dem Fachmann geeignet erscheinende Weise, beispielsweise stoffschlüssig miteinander verbunden sind. Das Achselement 26a weist zwei in axialer Richtung einander gegenüberliegend angeordnete Enden auf. Das Achselement 26a weist ein bezogen auf eine Achsmitte äußeres Ende und ein bezogen auf eine Achsmitte inneres Ende auf. Das Achselement 26a ist an dem äußeren Ende mit dem Längslenker 18a verbunden. Das Achselement 26a ist röhrenförmig ausgebildet. Das Achselement 26a ist in Form eines langgestreckten Hohlzylinders ausgebildet. Das Achselement 26a ist als ein Achsrohr ausgebildet.

Die erste Achse 14a weist eine Lagereinheit 34a auf, die axial zwischen den Achselementen 26a, 28a angeordnet ist. Analog weist die weitere Achse 16a der Achsvorrichtung 10a eine Lagereinheit 36a auf, die axial zwischen den Achselementen 30a, 32a der weiteren Achse 16a angeordnet ist. Die Lagereinheit 34a der ersten Achse 14a ist zentral an der Achse 14a angeordnet. Die Lagereinheit 34a ist bezogen auf eine axiale Erstreckung der Achse 14a in der Achsmitte angeordnet. Es ist denkbar, dass die Lagereinheit 34a bezogen auf die axiale Erstreckung der Achse 14a außermittig angeordnet ist. Es ist denkbar, dass die Lagereinheit 34a bezogen auf die axiale Erstreckung axial beabstandet von der Achsmitte angeordnet ist. Die Lagereinheit 34a ist zwischen den Achselementen 26a, 28a der ersten Achse 14a angeordnet. Die Lagereinheit 34a ist räumlich zwischen den Achselementen 26a, 28a angeordnet. Die Lagereinheit 34a ist wirkungstechnisch zwischen den Achselementen 26a, 28a angeordnet. Die Lagereinheit 34a weist ein Stütz- und Führungselement 82a auf. Das Stütz- und Führungselement 82a ist in axialer Richtung zentral in der Lagereinheit 34a angeordnet. Das Stütz- und Führungselement 82a ist in radialer Richtung zentral in der Lagereinheit 34a angeordnet. Das Stütz- und Führungselement 82a ist in Form eines dickwandigen Hohlzylinders ausgebildet. Das Stütz- und Führungselement 82a ist koaxial zu der Achse 14a und zu den Achselementen 26a, 28a angeordnet. Die Lagereinheit 34a ist dazu vorgesehen, jedes der Achselemente 26a, 28a in axialer Richtung drehbar zu lagern. Die Lagereinheit 34a ist dazu vorgesehen, die Achselemente 26a, 28a in axialer Richtung drehbar gegeneinander zu lagern.

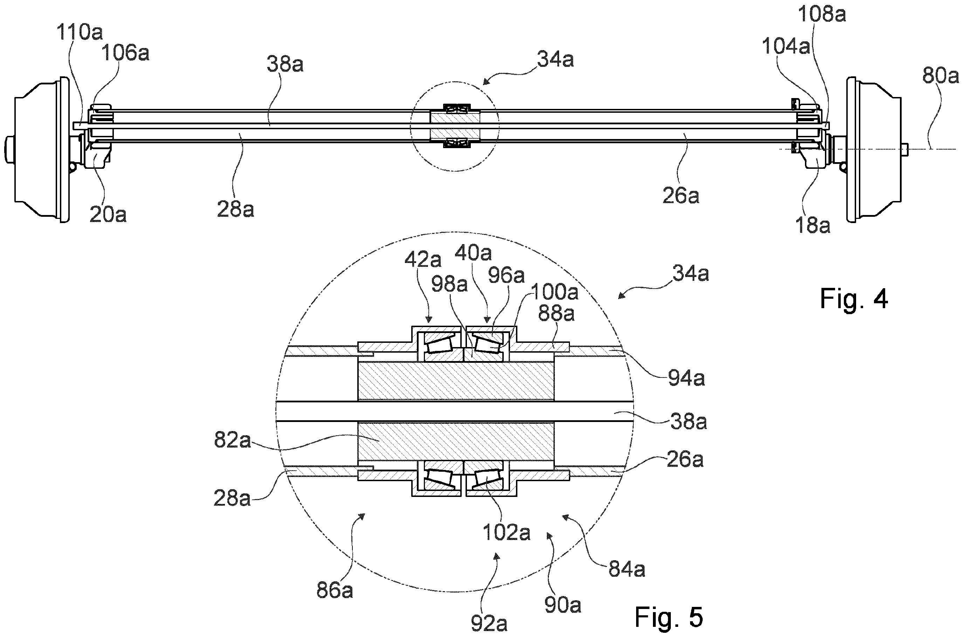

Die Achsvorrichtung 10a weist ein Zugelement 38a auf, das dazu vorgesehen ist, eine zumindest im Wesentlichen axial gerichtete Zugkraft zwischen den Achselementen 26a, 28a bereitzustellen (vgl. Figur 4). Das Zugelement 38a ist in dem vorliegenden Ausführungsbeispiel als ein Drahtseil ausgebildet. Es ist denkbar, dass das Zugelement 38a als ein anderes Seil oder in einer anderen Form ausgebildet ist. Die Zugkraft presst in einem montierten Zustand das erste Achselement 26a, die Lagereinheit 34a und das zweite Achselement 28a aufeinander. Die Zugkraft presst in einem montierten Zustand das erste Achselement 26a und das zweite Achselement 28a auf die Lagereinheit 34a. Das Zugelement 38a ist elastisch ausgebildet. Die Zugkraft ist als eine Spannkraft ausgebildet.

Die Lagereinheit 34a weist in dem vorliegenden Ausführungsbeispiel zwei Lagerteileinheiten 84a, 86a auf (vgl. Figur 5). Die Lagerteileinheiten 84a, 86a sind analog zueinander ausgebildet. Die Lagerteileinheiten 84a, 86a sind bezogen auf eine axiale Richtung spiegelbildlich zueinander angeordnet. Die Lagerteileinheiten 84a, 86a sind jeweils einem der Achselemente 26a, 28a zugeordnet. Die Lagerteileinheiten 84a, 86a sind bezogen auf eine axiale Richtung spiegelbildlich zueinander angeordnet. Die Lagerteileinheiten 84a, 86a sind bezogen auf eine axiale Richtung spiegelbildlich zueinander ausgebildet. Die Lagereinheit 34a weist in dem vorliegenden Ausführungsbeispiel zwei Lager 40a, 42a auf, die jeweils dazu vorgesehen sind, eines der Achselemente 26a, 28a drehbar zu lagern und die Zugkraft des Zugelements 38a zumindest im Wesentlichen aufzunehmen.

Die Lagerteileinheiten 84a, 86a sind analog zueinander ausgebildet, weshalb im Folgenden nur eine erste der Lagerteileinheiten 84a näher beschreiben wird. Die erste Lagerteileinheit 84a umfasst eines der Lager 40a der Lagereinheit 34a. Das Lager 40a ist dazu vorgesehen, das der Lagerteileinheit 84a zugeordnete Achselement 26a drehbar zu lagern. Das Lager 40a ist in dem vorliegenden Ausführungsbeispiel dazu vorgesehen, die Achselemente 26a, 28a drehbar gegeneinander zu lagern. Die Lagerteileinheit 84a umfasst ein Hülsenelement 88a. Das Hülsenelement 88a ist mit dem Achselement 26a, das der Lagerteileinheit 84a zugeordnet ist, zumindest in einer axialen Richtung zumindest kraftschlüssig verbunden. Das Hülsenelement 88a ist mit dem Achselement 26a, das der Lagerteileinheit 84a zugeordnet ist, zumindest in einer axialen Richtung formschlüssig verbunden. Das Hülsenelement 88a und das Achselement 26a weisen jeweils in radialer Richtung einander zugewandte Kontaktflächen auf. Das Hülsenelement 88a weist in axialer Richtung aufeinander folgend einen Anschlussabschnitt 90a und einen Lagerabschnitt 92a auf. Das Hülsenelement 88a ist in dem vorliegenden Ausführungsbeispiel auf das Achselement 26a aufgesteckt. Der Anschlussabschnitt 90a des Hülsenelements 88a überdeckt in einem Verbindungsbereich das Achselement 26a. Das Achselement 26a greift in dem Verbindungsbereich in das Hülsenelement 88a ein. Die Lagerteileinheit 84a weist einen senkrecht zu der Drehachse 78a des Achselements 26a angeordneten Querschnitt auf, in dem das Hülsenelement 88a das Achselement 26a umgibt. Das Achselement 26a weist eine Wandung 94a auf. An einem dem Hülsenelement 88a zugewandten Ende des Achselements 26a weist ein Längsschnitt der Wandung 94a zwei radial einander gegenüberliegende Stufen zu einer Aufnahme des Hülsenelements 88a auf. Das Hülsenelement 88a weist in dem Verbindungsbereich eine ringförmige Ausnehmung zur Aufnahme des Achselements 26a auf. Es ist auch denkbar, dass in einer alternativen Ausgestaltung das Hülsenelement 88a in das Achselement 26a eingreift. Es ist auch denkbar, dass das Hülsenelement 88a und das Achselement 26a auf andere dem Fachmann zweckmäßig erscheinende Weise, beispielsweise stoffschlüssig miteinander verbunden sind.

Der Lagerabschnitt 92a des Hülsenelements 88a ist in Form eines Hohlzylinders ausgebildet. Der Anschlussabschnitt 90a des Hülsenelements 88a ist in Form eines Hohlzylinders ausgebildet. Der Lagerabschnitt 92a weist einen größeren Durchmesser auf als der Anschlussabschnitt 90a. In dem vorliegenden Ausführungsbeispiel weist der Lagerabschnitt 92a des Hülsenelements 88a einen größeren Durchmesser auf als der Anschlussabschnitt 90a. Das Hülsenelement 88a weist eine Wandung auf. Ein Längsschnitt der Wandung weist an einem Übergang zwischen dem Lagerabschnitt 92a und dem Anschlussabschnitt 90a zwei radial einander gegenüberliegende Stufen auf.

Das Lager 40a ist als ein Schräglager ausgebildet. Das Lager 40a weist einen Außenring 96a auf. Der Außenring 96a des Lagers 40a ist zumindest in axialer Richtung fest mit dem Hülsenelement 88a verbunden. Der Außenring 96a des Lagers 40a weist eine konische Lauffläche auf. Der Außenring 96a des Lagers 40a weist einen Innenkonus auf. Der Innenkonus des Außenrings 96a ist zu einer von dem Achselement 26a abgewandten Seite hin geöffnet. Der Innenkonus verjüngt sich an einer dem Achselement 26a zugewandten Seite. Das Lager 40a weist einen Innenring 98a auf. Der Innenring 98a des Lagers 40a ist zumindest in axialer Richtung fest mit dem Stütz- und Führungselement 82a der Lagereinheit 34a verbunden. Der Innenring 98a weist eine konische Lauffläche auf. Der Innenring 98a weist einen Außenkonus auf. Der Außenkonus ist zu einer von dem Achselement 26a abgewandten Seite hin geöffnet. Der Außenkonus verjüngt sich an einer dem Achselement 26a zugewandten Seite.

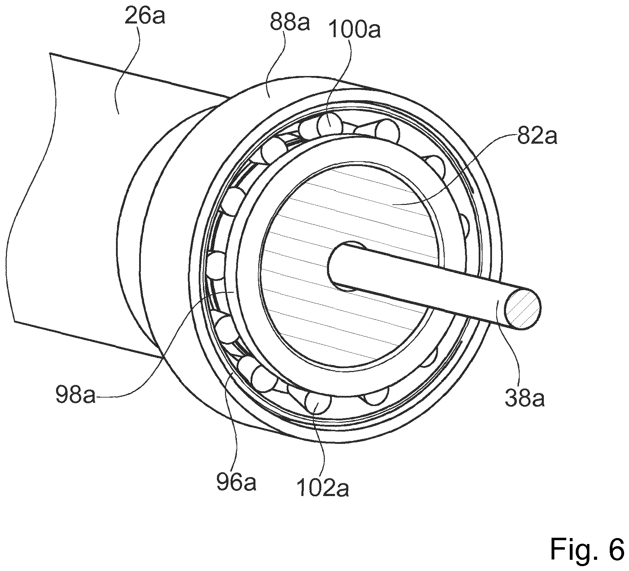

Der Innenkonus des Außenrings 96a weist in dem vorliegenden Ausführungsbeispiel einen größeren Öffnungswinkel auf als der Außenkonus des Innenrings 98a. Das Lager 40a weist eine Mehrzahl von Wälzkörpern 100a, 102a auf. In dem vorliegenden Ausführungsbeispiel sind die Wälzkörper 100a, 102a in Form von Kegelstümpfen ausgebildet. Das Lager 40a ist als ein Kegelrollenlager ausgebildet (vgl. Figur 6). Die Wälzkörper 100a, 102a sind konisch ausgebildet. Die Wälzkörper 100a, 102a weisen jeweils zwei axiale Enden mit unterschiedlichen Durchmessern auf. In einem montierten Zustand ist ein axiales Ende das einen maximalen Durchmesser aufweist, abgewandt von dem Achselement 26a angeordnet. Ein axiales Ende, das einen minimalen Durchmesser aufweist ist dem Achselement 26a zugewandt angeordnet. Es ist auch denkbar, dass die Wälzkörper 100a, 102a eine andere Form aufweisen und beispielsweise zylinderförmig oder kugelförmig ausgebildet sind. Die Wälzkörper 100a, 102a weisen jeweils eine Drehachse auf. In einem montierten Zustand sind die Drehachsen der Wälzkörper 100a, 102a schräg zu der Drehachse der Achse 14a angeordnet. Die Drehachsen der Wälzkörper 100a, 102a schließen mit der Drehachse 78a der Achse 14a einen Winkel ein, der in dem vorliegenden Ausführungsbeispiel in einer dem Achselement 26a abgewandten Richtung geöffnet ist. Der Innenring 98a des Lagers 40a ist drehfest mit dem Stütz- und Führungselement 82a verbunden. Der Innenring 98a des Lagers 40a ist drehfest mit einem Innenring 98a des Lagers 40a einer weiteren Lagerteileinheit 86a der Lagereinheit 34a verbunden.

In einer alternativen Ausgestaltung kann der Innenring 98a des Lagers 40a mit dem Achselement 26a drehfest verbunden und der Außenring 96a des Lagers 40a mit einem Stütz- und Führungselement 82a drehfest verbunden sein. In einer solchen Ausgestaltung können die Wälzkörper 100a, 102a jeweils eine Drehachse aufweisen, die mit der Achse 14a einen Winkel einschließt, der in einer dem Achselement 26a zugewandten Richtung geöffnet ist. In einer weiteren alternativen Ausgestaltung kann die Lagerteileinheit 86a zwei Lager aufweisen, von denen beispielsweise eines als ein Axiallager und ein weiteres als ein Radiallager ausgebildet ist. Es ist denkbar, dass die Lagereinheit 34a in einer weiteren alternativen Ausgestaltung ein einziges Lager aufweist, das die Achselemente 26a, 28a gegeneinander lagert.

Das Zugelement 38a durchsetzt das erste Achselement 26a in axialer Richtung. Das Zugelement 38a durchsetzt das weitere Achselement 26a in axialer Richtung. Das Zugelement 38a durchsetzt die beiden Achselemente 26a, 28a in axialer Richtung. Das Zugelement 38a durchsetzt die Lagereinheit 34a in axialer Richtung. Das Zugelement 38a durchsetzt das Stütz- und Führungselement 82a. Das Stütz- und Führungselement 82a weist eine zentrale Bohrung in axialer Richtung auf. Die Bohrung ist zu einer Aufnahme des Zugelements 38a vorgesehen. Das Stütz- und Führungselement 82a ist dazu vorgesehen, das Zugelement 38a zu stützen und/oder zu führen. Eine Erstreckung des Zugelements 38a in Richtung der Achse 14a entspricht einer Summe aus einer Erstreckung des ersten Achselements 26a in Richtung der Achse 14a, aus einer Erstreckung des weiteren Achselements 28a in Richtung der Achse 14a und aus einer Erstreckung der Lagereinheit 34a in Richtung der Achse 14a. Die Achse 14a weist zwei Fixierelemente 104a, 106a auf, die zu einer axialen Fixierung des Zugelements 38a vorgesehen sind. Die Fixierelemente 104a, 106a sind jeweils einem der Achselemente 26a, 28a zugeordnet. Die Fixierelemente 104a, 106a sind jeweils dazu vorgesehen, die von dem Zugelement 38a bereitgestellte Zugkraft auf das dem jeweiligen Fixierelement 104a, 106a zugeordnete Achselement 26a, 28a zu übertragen. Das Zugelement 38a weist an seinen Enden jeweils ein Anschlagelement 108a, 110a auf, das jeweils dazu vorgesehen ist, die Zugkraft des Zugelements 38a auf jeweils ein Fixierelement 104a, 106a zu übertragen. Die Fixierelemente 104a, 106a sind in dem vorliegenden Ausführungsbeispiel jeweils dazu vorgesehen, jeweils ein Drahtseilende radial zentriert an einem Ende des zugeordneten Achselements 26a, 28a anzuordnen.

Die Achsvorrichtung 10a weist eine Lagerstelle 44a zu einer direkten Lagerung des ersten Achselements 26a der ersten Achse 14a und eine weitere Lagerstelle 46a zu einer direkten Lagerung des weiteren Achselements 28a der ersten Achse 14a auf. Die Achsvorrichtung 10a weist eine dritte Lagerstelle 48a zu einer direkten Lagerung des ersten Achselements 30a der weiteren Achse 16a und eine vierte Lagerstelle 50a zu einer direkten Lagerung des weiteren Achselements 32a der weiteren Achse 16a auf.

In einem montierten Zustand ist das erste Achselement 26a der ersten Achse 14a an der Lagerstelle 44a direkt drehbar gegenüber dem Lastrahmen des hinteren Fahrzeugabschnitts 60a gelagert. Das erste Achselement 26a ist verschwenkbar gegenüber dem Lastrahmen des hinteren Fahrzeugabschnitts 60a gelagert. Das weitere Achselement 28a ist an der weiteren Lagerstelle 46a direkt drehbar gegenüber dem Lastrahmen des hinteren Fahrzeugabschnitts 60a gelagert. Das weitere Achselement 28a ist verschwenkbar gegenüber dem Lastrahmen des hinteren Fahrzeugabschnitts 60a gelagert. Die Lagerstelle 44a und die weitere Lagerstelle 46a sind dazu vorgesehen, die Achselemente 26a, 28a unabhängig voneinander zu lagern. Die Achselemente 26a, 28a sind in einem montierten Zustand unabhängig voneinander direkt drehbar gegenüber dem Lastrahmen des hinteren Fahrzeugabschnitts 60a gelagert. Die Achsvorrichtung 10a umfasst eine erste Achslagereinheit 112a, welche die Lagerstelle 44a zu einer direkten Lagerung des ersten Achselements 26a ausbildet. Die Achsvorrichtung 10a umfasst eine weitere Achslagereinheit 114a, welche die weitere Lagerstelle 46a zu einer direkten Lagerung des weiteren Achselements 28a ausbildet. Die erste Achslagereinheit 112a ist dem ersten Achselement 26a zugeordnet. Die weitere Achslagereinheit 114a ist dem weiteren Achselement 28a zugeordnet. Die Achslagereinheit 112a und die weitere Achslagereinheit 114a sind getrennt voneinander ausgebildet. Die Achslagereinheit 112a und die weitere Achslagereinheit 114a sind beabstandet voneinander angeordnet.

Die Achslagereinheiten 112a, 114a sind analog zueinander ausgebildet, weshalb im Folgenden nur die erste der Achslagereinheiten 112a näher beschrieben wird. Die Achslagereinheit 114a ist als ein Lagerschemel ausgebildet. Die Achslagereinheit 114a weist ein Befestigungselement 116a zu einer festen Befestigung an dem Lastrahmen des hinteren Fahrzeugabschnitts 60a auf. Das Befestigungselement 116a ist in dem vorliegenden Ausführungsbeispiel dazu vorgesehen, mit einem Element des Lastrahmens, beispielsweise mit einem der Längsträger 66a verschraubt zu werden. Es ist denkbar, dass das Befestigungselement 116a zu einer anderen Befestigung vorgesehen ist, beispielsweise durch Schweißen, Löten oder auf eine andere dem Fachmann als sinnvoll erscheinende Weise. Das Befestigungselement 116a ist als eine Platte ausgebildet. Das Befestigungselement 116a ist in dem vorliegenden Ausführungsbeispiel als eine Metallplatte ausgebildet. Die Achslagereinheit 114a weist in dem vorliegenden Ausführungsbeispiel einen zweiteiligen Lagerbock auf. Der Lagerbock ist in radialer Richtung geteilt. In dem vorliegenden Ausführungsbeispiel entspricht eine axiale Erstreckung der Lagerstelle 46a einer axialen Erstreckung des Befestigungselements 116a der Achslagereinheit 114a. Die axiale Erstreckung der Lagerstelle 46a ist in dem vorliegenden Ausführungsbeispiel kleiner als 90a mm.

Die Achsvorrichtung 10a umfasst vier Stoßdämpfereinheiten. Der ersten Achse 14a sind zwei Stoßdämpfereinheiten zugeordnet. Der weiteren Achse 16a sind zwei weitere Stoßdämpfereinheiten zugeordnet. Die Stoßdämpfereinheiten sind analog zueinander ausgebildet, weshalb nur eine erste der Stoßdämpfereinheiten näher beschrieben wird. Die erste Stoßdämpfereinheit ist dem ersten Achselement 26a, der ersten Achse 14a zugeordnet. Die erste Stoßdämpfereinheit ist dem ersten Längslenker 18a zugeordnet. Die Stoßdämpfereinheit ist dazu vorgesehen, eine Schwenkbewegung des zugeordneten Achselements 26a und/oder des zugeordneten Längslenkers 18a zu dämpfen. Die Stoßdämpfereinheit umfasst ein Dämpfungselement, beispielsweise ein hydraulisches Dämpfungselement, ein mechanisches Dämpfungselement oder eine anderes dem Fachmann geeignet erscheinendes Dämpfungselement. Die Stoßdämpfereinheit ist wirkungsmäßig zwischen dem Längslenker 18a und dem Lastrahmen angeordnet. In einer alternativen Ausgestaltung kann die Stoßdämpfereinheit, insbesondere wirkungsmäßig, zwischen dem zugeordneten Längslenker 18a und der Lagereinheit 44a angeordnet sein. In einer solchen Ausgestaltung kann ein Element der Lagereinheit 44a, insbesondere der Lagerbock und/oder das Befestigungselement 116a, eine Erstreckung in Fahrtrichtung aufweisen, die einer Erstreckung des Längslenkers 18a in Fahrtrichtung entspricht. Das Element der Lagereinheit 44a kann insbesondere im Vergleich zu dem vorliegenden Ausführungsbeispiels verlängert sein.

Die Achsvorrichtung 10a umfasst zwei elastisch verformbare Pleueleinheiten 52a, 54a, die jeweils dazu vorgesehen sind, eine Schwenkbewegung eines der Achselemente 26a, 28a der ersten Achse 14a mit einer Schwenkbewegung eines der Achselemente 30a, 32a der weiteren Achse 16a zu koppeln. Die Pleueleinheiten 52a, 54a sind dazu vorgesehen, ein Drehmoment das auf eines der Achselemente 26a, 28a der ersten Achse 14a wirkt, gegenüber einem Achselement 30a, 32a der weiteren Achse 16a abzustützen und umgekehrt ein Drehmoment das auf eines der Achselemente 30a, 32a der weiteren Achse 16a wirkt, gegenüber einem Achselement 26a, 28a der ersten Achse 14a abzustützen. Die Pleueleinheiten 52a, 54a weisen jeweils eine Haupterstreckungsrichtung auf. Die Pleueleinheiten 52a, 54a sind in einem montierten Zustand zumindest im Wesentlichen parallel zueinander angeordnet. Die Pleueleinheiten 52a, 54a sind in einem montierten Zustand zumindest im Wesentlichen parallel zu der Hauptfahrtrichtung 56a angeordnet.

Die Achsvorrichtung 10a umfasst vier Hebelelemente 118a, 120a, 122a, 124a, die jeweils zu einer Verbindung eines Achselements 26a, 28a, 30a, 32a mit einer Pleueleinheiten 52a, 54a vorgesehen sind. Die Hebelelemente 118a, 120a, 122a, 124a sind jeweils einem der Achselemente 26a, 28a, 30a, 32a zugeordnet. Ein erstes der Hebelelemente 118a verbindet in einem montierten Zustand das erste Achselement 26a der ersten Achse 14a mit einer ersten der Pleueleinheiten 52a. Ein zweites der Hebelelemente 120a verbindet in einem montierten Zustand das weitere Achselement 28a der ersten Achse 14a mit einer weiteren der Pleueleinheiten 54a. Ein drittes der Hebelelemente 122a verbindet in einem montierten Zustand das erste Achselement 30a der weiteren Achse 16a mit der ersten Pleueleinheit 52a. Ein viertes der Hebelelemente 124a verbindet in einem montierten Zustand das weitere Achselement 32a der weiteren Achse 16a mit der weiteren Pleueleinheit 54a. Die Hebelelemente 118a, 120a, 122a, 124a sind jeweils drehfest mit dem zugeordneten Achselement 26a, 28a, 30a, 32a verbunden.

Die Pleueleinheiten 52a, 54a sind analog zueinander ausgebildet, weshalb im Folgenden nur die erste Pleueleinheit 52a näher beschrieben wird. Die erste Pleueleinheit 52a weist zwei in der Haupterstreckungsrichtung der Pleueleinheit 52a gegeneinander bewegbare Rohrelemente 126a, 128a auf. Die Pleueleinheit 52a weist ein Rückstellelement 130a auf, das wirkungsmäßig zwischen den Rohrelementen 126a, 128a angeordnet ist. Das Rückstellelement 130a ist in dem vorliegenden Ausführungsbeispiel als eine Schraubenfeder ausgebildet, welche die Rohrelemente 126a, 128a in einem montierten Zustand umgibt. Die Rohrelemente 126a, 128a sind zu einer gedämpften translatorischen Bewegung gegeneinander vorgesehen, die zu einer Längenänderung der Pleueleinheit 52a führt. Das Rückstellelement 130a ist dazu vorgesehen, der Längenänderung der Pleueleinheit 52a entgegenzuwirken. Die Pleueleinheit 52a weist zwei in der Haupterstreckungsrichtung voneinander abgewandte Enden auf. Das Pleueleinheit 52a ist an einem ersten der Enden drehbar mit dem ersten Hebelelement 118a verbunden. Die Pleueleinheit 52a weist an dem ersten Ende eine Drehachse 78a gegenüber dem ersten Hebelelement 118a auf, mit dem es dort verbunden ist. Die Drehachse 78a ist parallel zu der Drehachse 78a des ersten Achselements 26a angeordnet, mit dem die Pleueleinheit 52a an dem ersten Ende mittels des ersten Hebelelements 118a verbunden ist. Ein zweites Ende der Pleueleinheit 52a ist mit dem ersten Achselement 30a der weiteren Achse 16a mittels des zweiten Hebelelements 120a verbunden. Die Pleueleinheit 52a weist an dem zweiten Ende eine Drehachse gegenüber dem zweiten Hebelelement 118a auf, mit dem es dort verbunden ist. Die Drehachse ist parallel zu der Drehachse des Achselements 30a angeordnet, mit dem die Pleueleinheit 52a an dem zweiten Ende verbunden ist. Die Pleueleinheit 52a ist dazu vorgesehen, Achselemente 26a, 30a unterschiedlicher Achsen 14a, 16a miteinander zu verbinden.

Die Hebelelemente 118a, 120a, 122a, 124a weisen jeweils eine Hebelarmrichtung auf, die zumindest im Wesentlichen senkrecht zu der Achse 14a, 16a ausgerichtet ist, mit der das jeweilige Hebelelement 118a, 120a, 122a, 124a drehfest verbunden ist. Die Hebelarmrichtung weist von der Drehachse des Achselements 26a, 28a, 30a, 32a mit dem das Hebelelement 118a, 120a, 122a, 124a verbunden ist, zu der Drehachse der Pleueleinheit 52a, 54a, mit dem das Hebelelement 118a, 120a, 122a, 124a verbunden ist. Die Hebelarmrichtung ist jeweils zumindest im Wesentlichen senkrecht zu der Hauptfahrtrichtung 56a ausgerichtet. Die Hebelarmrichtungen von Hebelelementen 118a, 120a, 122a, 124a, die einer gleichen Pleueleinheit 52a, 54a zugeordnet sind, sind zumindest im Wesentlichen entgegengesetzt zueinander angeordnet.

Die erste Pleueleinheit 52a ist dazu vorgesehen, eine Schwenkbewegung des mit der Pleueleinheit 52a verbundenen ersten Achselements 26a der ersten Achse 14a und eine Schwenkbewegung des mit der Pleueleinheit 52a verbundenen ersten Achselements 30a der weiteren Achse 16a gegengleich miteinander zu koppeln. In einem Betriebszustand der Achsvorrichtung 10a wird das erste Achselement 26a der ersten Achse 14a durch ein Drehmoment, das auf den mit dem Achselement 26a verbundenen Längslenker 18a wirkt, ausgelenkt. Das Achselement 26a schwenkt um seine Drehachse 78a in eine erste Drehrichtung. Das erste Hebelelement 118a übersetzt die Schwenkbewegung in eine zumindest im Wesentlichen translatorische Bewegung der ersten Pleueleinheit 52a. Die Pleueleinheit 52a überträgt die Schwenkbewegung des ersten Achselements 26a der ersten Achse 14a gedämpft auf das erste Achselement 30a der weiteren Achse 16a. Das zweite Hebelelement 120a übersetzt die zumindest im Wesentlichen translatorische Bewegung der ersten Pleueleinheit 52a in eine Schwenkbewegung des ersten Achselements 30a der weiteren Achse 16a. Die Schwenkbewegung des ersten Achselements 30a der weiteren Achse 16a weist eine Drehrichtung auf, die der Drehrichtung der Schwenkbewegung des ersten Achselements 30a der ersten Achse 16a entgegengesetzt ist.

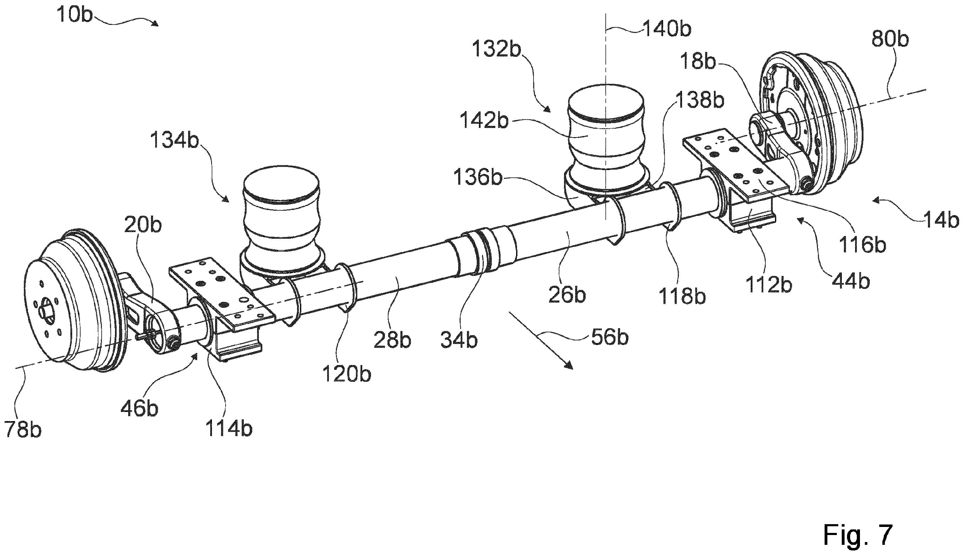

Figur 7 zeigt ein weiteres Ausführungsbeispiel der Achsvorrichtung 10b für ein nicht näher dargestelltes Fahrzeug. Bei den weiteren Ausführungsbeispielen werden grundsätzlich ausschließlich Unterschiede zu vorhergehenden Ausführungsbeispielen beschrieben. Bezüglich gleichbleibender Funktionen und Bauteile darf auf die Beschreibung der vorhergehenden Ausführungsbeispiele verwiesen werden. Gleichbleibende Bauteile sind grundsätzlich mit den gleichen Bezugszeichen beziffert, wobei zur Unterscheidung der Ausführungsbeispiele den Bezugszeichen die Buchstaben a, b und c hinzugefügt sind.

Im Unterschied zu dem vorangehenden Ausführungsbeispiel weist die Achsvorrichtung 10b lediglich eine Achse 14b auf. Die Achse 14b weist analog zu dem vorangehenden Ausführungsbeispiel zwei Längslenker 18b, 20b auf, die jeweils zur Lagerung eines Laufrads vorgesehen sind. Das Fahrzeug umfasst einen nicht näher dargestellten Lastrahmen, der dazu vorgesehen ist, ein Gewicht einer nicht näher dargestellten Nutzlast insbesondere auf die Achse 14b der Achsvorrichtung 10b zu übertragen.

Die Achse 14b ist als nicht-lenkbare Achse 14b ausgebildet. Die Achse 14b ist zu einer Lagerung von zwei Laufrädern vorgesehen, die an einander abgewandten Seiten des Fahrzeugs angeordnet sind. Die Laufräder sind in einem montierten Zustand an einander abgewandten Seiten der Achse 14b angeordnet. Die Achse 14b weist eine Drehachse 78b auf, die zumindest im Wesentlichen senkrecht zu einer Hauptfahrtrichtung 56b des Fahrzeugs ausgerichtet ist.

Die Längslenker 18b, 20b der Achse 14b sind an zwei voneinander abgewandten Seiten der Achse 14b angeordnet. Ein erster der Längslenker 18b ist bezogen auf die Hauptfahrtrichtung 56b des Fahrzeugs links von einer Achsmitte angeordnet. Ein weiterer der Längslenker 20b ist bezogen auf die Hauptfahrtrichtung 56b des Fahrzeugs rechts von der Achsmitte angeordnet. Die Längslenker 18b, 20b sind analog zueinander ausgebildet, weshalb im Folgenden nur der erste der Längslenker 18b näher beschrieben wird. Der erste Längslenker 18b ist langgestreckt ausgebildet und weist bezogen auf eine Haupterstreckungsrichtung zwei voneinander abgewandte Enden auf. Der Längslenker 18b ist an einem ersten der Enden schwenkbar bezogen auf die Drehachse 78b der Achse 14b gelagert. Der Längslenker 18b weist einen Drehpunkt auf, der auf der Drehachse 78b der Achse 14b angeordnet ist. Das an dem Längslenker 18b gelagerte Laufrad weist eine Drehachse 80b auf. Die Drehachse 80b des Laufrads ist an einem weiteren der Enden des Längslenkers 18b angeordnet. Die Drehachse 80b des Laufrad und der Drehpunkt des Längslenkers 18b sind beabstandet voneinander angeordnet. Der Längslenker 18b ist dazu vorgesehen, zu einer Änderung eines Abstands zwischen dem an dem Längslenker 18b gelagerten Laufrad und dem Lastrahmen des Fahrzeugs geschwenkt zu werden.

Die Achse 14b umfasst zwei Achselemente 26b, 28b, die jeweils drehfest mit einem der Längslenker 18b, 20b verbunden sind. Je eines der Achselemente 26b, 28b ist jeweils einem der Längslenker 18b, 20b zugeordnet. Die Achselemente 26b, 28b der Achse 14b weisen eine Haupterstreckung in Richtung der Drehachse 80b der Achse 14b auf. Die Achselemente 26b, 28b sind fluchtend zueinander angeordnet. Die Achselemente 26b, 28b sind kolinear zueinander angeordnet. Die Achselemente 26b, 28b sind zu einer Drehung um die Drehachse 78b der Achse 14b vorgesehen. Der Längslenker 18b ist mittels des Achselements 26b schwenkbar gelagert. In dem vorliegenden Ausführungsbeispiel sind die Achselemente 26b, 28b analog zueinander ausgebildet, weshalb im Folgenden nur das erste der Achselemente 26b näher beschrieben wird.

Das Achselement 26b ist in dem vorliegenden Ausführungsbeispiel formschlüssig mit dem ihm zugeordneten Längslenker 18b verbunden. Das Achselement 26b und der Längslenker 18b sind mittels eines Bolzens miteinander verbunden. Das Achselement 26b weist zwei in axialer Richtung einander gegenüberliegend angeordnete Enden auf. Das Achselement 26b weist ein bezogen auf eine Achsmitte äußeres Ende und ein bezogen auf eine Achsmitte inneres Ende auf. Das Achselement 26b ist an dem äußeren Ende mit dem Längslenker 18b verbunden.

Die Achse 14b weist eine Lagereinheit 34b auf, die axial zwischen den Achselementen 26b, 28b angeordnet ist. Die Lagereinheit 34b der Achse 14b ist zentral an der Achse 14b angeordnet. Die Lagereinheit 34b ist bezogen auf eine axiale Erstreckung der Achse 14b in der Achsmitte angeordnet. Die Lagereinheit 34b ist zwischen den Achselementen 26b, 28b der Achse 14b angeordnet. Die Lagereinheit 34b ist räumlich zwischen den Achselementen 26b, 28b angeordnet. Die Lagereinheit 34b ist wirkungstechnisch zwischen den Achselementen 26b, 28b angeordnet.

Die Achsvorrichtung 10b weist ein nicht näher dargestelltes Zugelement auf, das dazu vorgesehen ist, eine zumindest im Wesentlichen axial gerichtete Zugkraft zwischen den Achselementen 26b, 28b bereitzustellen. Die Zugkraft presst in einem montierten Zustand das erste Achselement 26b, die Lagereinheit 34b und das zweite Achselement 28b aufeinander. Die Zugkraft presst in einem montierten Zustand das erste Achselement 26b und das zweite Achselement 28b auf die Lagereinheit 34b. Das Zugelement ist elastisch ausgebildet. Die Zugkraft ist als eine Spannkraft ausgebildet. Das Zugelement durchsetzt die Achselemente in axialer Richtung. Die Lagereinheit 34b ist analog zu dem vorangehenden Ausführungsbeispiel ausgebildet. Die Lagereinheit 34b weist zwei nicht näher dargestellte Lager auf, die jeweils dazu vorgesehen sind, jeweils eines der Achselemente 26b, 28b drehbar zu lagern, und die Zugkraft des Zugelements aufzunehmen. Die Lager sind analog zu dem vorangehenden Ausführungsbeispiel jeweils als ein Schräglager ausgebildet.

Die Achsvorrichtung 10b weist eine Lagerstelle 44b zu einer direkten Lagerung des ersten Achselements 26b der Achse 14b und eine weitere Lagerstelle 46b zu einer direkten Lagerung des weiteren Achselements 28b der Achse 14b auf. In einem montierten Zustand ist das erste Achselement 26b der Achse 14b an der Lagerstelle 44b direkt drehbar gegenüber dem Lastrahmen gelagert. Das erste Achselement 26b ist verschwenkbar gegenüber dem Lastrahmen des Fahrzeugs gelagert. Das weitere Achselement 28b ist an der weiteren Lagerstelle 46b direkt drehbar gegenüber dem Lastrahmen des Fahrzeugs gelagert. Das weitere Achselement 28b ist verschwenkbar gegenüber dem Lastrahmen des Fahrzeugs gelagert. Die Lagerstelle 44b und die weitere Lagerstelle 46b sind dazu vorgesehen, die Achselemente 26b, 28b unabhängig voneinander gegenüber dem Lastrahmen zu lagern. Die Achsvorrichtung 10b umfasst eine erste Achslagereinheit 112b, welche die Lagerstelle 44b zu einer direkten Lagerung des ersten Achselements 26b ausbildet. Die Achsvorrichtung 10b umfasst eine weitere Achslagereinheit 114b, welche die weitere Lagerstelle 46b zu einer direkten Lagerung des weiteren Achselements 28b ausbildet. Die erste Achslagereinheit 112b ist dem ersten Achselement 26b zugeordnet. Die weitere Achslagereinheit 114b ist dem weiteren Achselement 28b zugeordnet. Die Achslagereinheit 112b und die weitere Achslagereinheit 114b sind getrennt voneinander ausgebildet. Die Achslagereinheit 112b und die weitere Achslagereinheit 114b sind beabstandet voneinander angeordnet.

Die Achslagereinheiten 112b, 114b sind analog zueinander ausgebildet, weshalb im Folgenden nur die erste der Achslagereinheiten 112b näher beschrieben wird. Die Achslagereinheit 114b ist als ein Lagerschemel ausgebildet. Die Achslagereinheit 114b weist ein Befestigungselement 116b zu einer festen Befestigung an dem Lastrahmen des hinteren Fahrzeugabschnitts 60b auf. Das Befestigungselement 116b ist in dem vorliegenden Ausführungsbeispiel dazu vorgesehen, mit einem Element des Lastrahmens, beispielsweise mit einem der Längsträger verschraubt zu werden.

Die Achsvorrichtung 10b umfasst zwei Stoßdämpfereinheiten 132b, 134b. Eine erste der Stoßdämpfereinheiten 132b ist dem ersten Achselement 26b zugeordnet. Eine weitere der Stoßdämpfereinheiten 134b ist dem weiteren Achselement 28b zugeordnet. Die Achsvorrichtung 10b umfasst zwei Hebelelemente 118b, 120b. Ein erstes der Hebelelemente 118b ist dem ersten Achselement 26b zugeordnet. Ein weiteres der Hebelelemente 120b ist dem weiteren Achselement 28b zugeordnet. Die Stoßdämpfereinheiten 132b, 134b sind analog zueinander ausgebildet, weshalb im Folgenden nur die erste Stoßdämpfereinheit 132b näher beschrieben wird. Ebenso sind die Hebelelemente 118b, 120b analog zueinander ausgebildet, weshalb im Folgenden nur das erste Hebelelement 118b näher beschrieben wird. Die Stoßdämpfereinheit 132b ist dazu vorgesehen, eine Schwenkbewegung des zugeordneten Achselements 26b und/oder des zugeordneten Längslenkers 18b zu dämpfen und/oder zu federn. Die Stoßdämpfereinheit 132b ist wirkungsmäßig zwischen dem Achselement 28b und dem Lastrahmen des Fahrzeugs angeordnet. Das erste Hebelelement 118b ist drehfest mit dem ersten Achselement 28b verbunden. In dem vorliegenden Ausführungsbeispiel weist das Hebelelement 118b zwei flach ausgebildete Streben 136b, 138b auf, sowie eine Auflagefläche, die beabstandet zu dem Achselement 28b angeordnet ist. Die Streben 136b, 138b sind dazu vorgesehen, das Achselement 28b mit der Auflagefläche zu verbinden. Die Stoßdämpfereinheit 132b weist eine Wirkachse 140b auf, die in einem montierten Zustand zumindest im Wesentlichen senkrecht zu der Auflagefläche ausgerichtet ist. Die Wirkachse 140b der Stoßdämpfereinheit 132b ist senkrecht zu der Achse 14b angeordnet. Die Wirkachse 140b der Stoßdämpfereinheit 132b ist beabstandet zu der Achse 14b angeordnet. Das Hebelelement 118b ist dazu vorgesehen, ein Drehmoment und/oder eine Drehbewegung zwischen dem Achselement 28b und der Auflagefläche zu übertragen. Das Hebelelement 118b ist dazu vorgesehen, eine Schwenkbewegung des Achselements 26b in eine translatorische Bewegung zu übersetzen. In einem montierten Zustand verkürzt oder verlängert das Hebelelement 118b bei einer Schwenkbewegung des Längslenkers 18b die Stoßdämpfereinheit 132b in Richtung der Wirkachse 140b. Die Stoßdämpfereinheit 132b umfasst zumindest ein Rückstellelement, zumindest ein Dämpfungselement und zumindest ein zylinderförmiges Balgelement 142b. Das Balgelement 142b bildet in einem montierten Zustand eine Hülle der Stoßdämpfereinheit 132b aus. Das Rückstellelement ist beispielsweise als eine mechanische Feder, wie eine Schraubenfeder, oder als eine Gasfeder oder als ein anderes dem Fachmann geeignet erscheinendes elastisches Element ausgebildet. Das Rückstellelement ist dazu vorgesehen, eine Rückstellkraft bereitzustellen, die einer Längenänderung in Richtung der Wirkachse 140b der Stoßdämpfereinheit 132b entgegenwirkt. Das Dämpfungselement ist beispielsweise als ein mechanisches Dämpfungselement, ein pneumatisches Dämpfungselement, ein hydraulisches Dämpfungselement oder dergleichen ausgebildet. Das Dämpfungselement ist dazu vorgesehen, insbesondere eine ruckartige Längenänderung zu dämpfen. Es ist denkbar, dass das Rückstellelement und das Dämpfungselement einstückig miteinander ausgebildet sind.

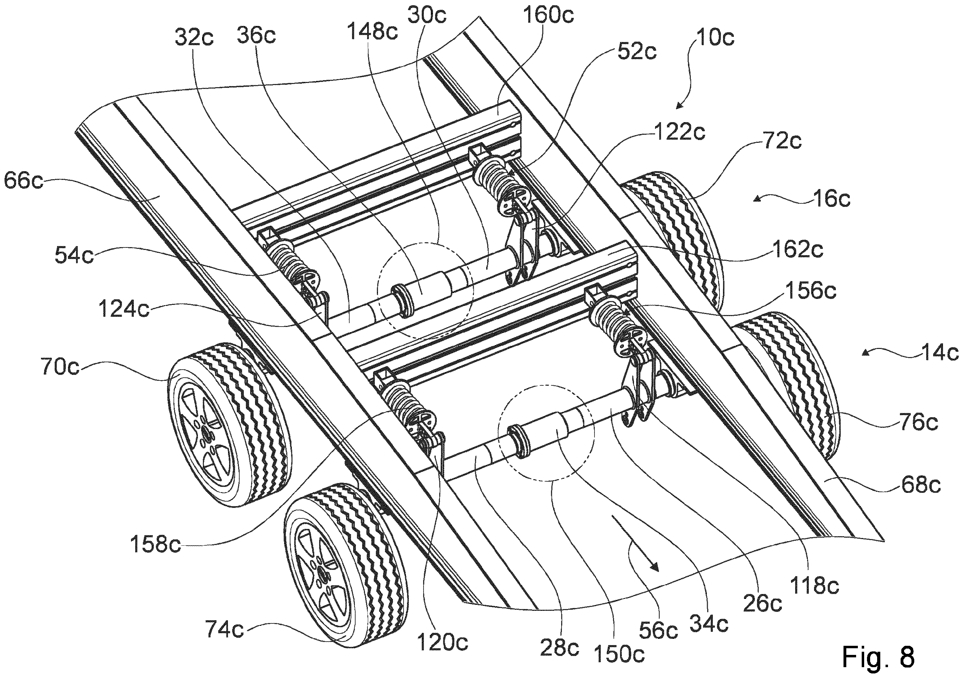

Figur 8 zeigt eine perspektivische Ansicht einer alternativen Achsvorrichtung mit zwei Achsen 14c, 16c. Die Achsen 14c, 16c sind gleich aufgebaut, so dass die nachfolgende Beschreibung auf die Achse 16c beschränkt werden kann.

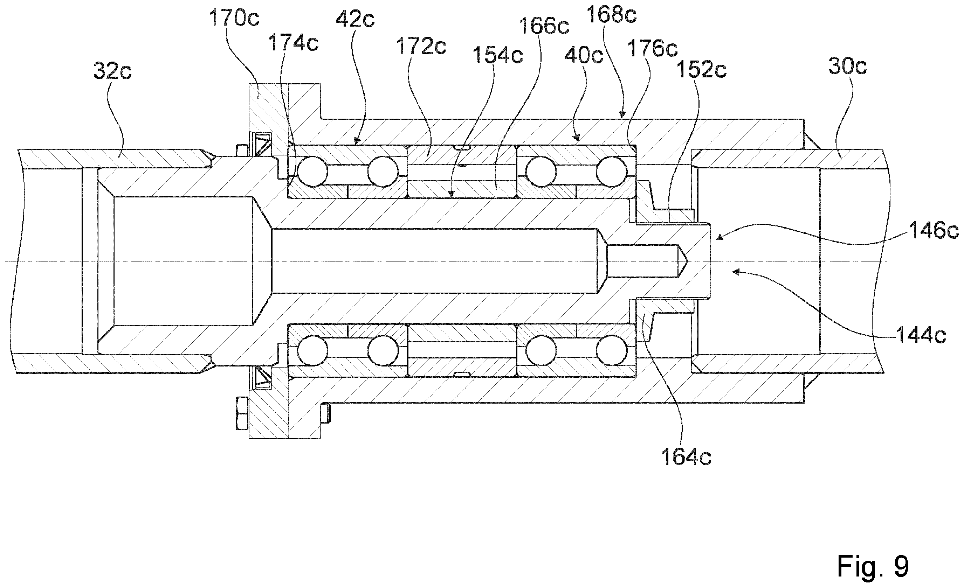

Die Achse 16c weist eine Lagereinheit 36c auf, die zwischen zwei Achselementen 30c, 32c der Achse 16c angeordnet ist und die Achselemente 30c, 32c relativ zueinander schwenkbar verbindet. Die Lagereinheit 36c weist eine Spanneinheit 144c auf, die dazu vorgesehen ist, die Achselemente 30c, 32c und Lager 40c, 42c der Lagereinheit 36c zu verspannen (Fig. 9). Die Spanneinheit 144c weist hierfür ein Spannelement 146c auf, das in einem Koppelbereich 148c der Achselemente 30c, 32c angeordnet ist.

Das Spannelement 146c wird von einem Innenbolzen 154c der Spanneinheit 144c gebildet und weist ein Gewinde 152c auf, das im Koppelbereich 148c der Achselemente 30c, 32c angeordnet ist. Der Innenbolzen 154c ist mit dem Achselement 32c drehfest verbunden. Der Innenbolzen 154c ist hierfür an einem dem Achselement 30c zugewandten Ende des Achselements 32c befestigt. Der Innenbolzen 154c ist teilweise in das Achselement 32c eingeschoben. Das Achselement 32c und der Innenbolzen 154c sind über eine Schweißverbindung drehfest verbunden. Das Gewinde 152c ist an einem dem Achselement 32c abgewandten Ende des Innenbolzen 154c angeordnet. Der Innenbolzen 154c ist in die dem Achselement 32c abgewandte Richtung gestuft mit einem abnehmenden Durchmesser ausgebildet.

Die Lager 40c, 42c der Lagereinheit 36c sind auf dem Innenbolzen 154c angeordnet. Die Lager 40c, 42c sind als Doppelreihenschrägkugellager ausgebildet. Die Lager 40c, 42c sind in einem Bereich des Innenbolzens 154c auf diesem gelagert, der einen Außendurchmesser aufweist, der kleiner ist als ein Außendurchmesser des Achselements 32c. Insbesondere ist der Außendurchmesser des Innenbolzens 154c in diesem Bereich kleiner als ein Innendurchmesser des als Rohr ausgebildeten Achselements 32c, wodurch die Lager 40c, 42c vorteilhaft integriert werden können.

Über das Gewinde 152c sind die Lager 40c, 42c der Lagereinheit 36c und die Achselemente 30c, 32c miteinander verspannt. Auf das Gewinde 152c ist eine Mutter 164c aufgeschraubt, die einen Innenring des Lagers 40c in Richtung des Achselements 32c belastet und auf diesen eine Spannkraft aufbringt. Die Spannkraft wird über einen Distanzinnenring 166c auf einen Innenring des Lagers 42c übertragen, wobei der Innenring des Lagers 42c an einem Absatz 174c des Innenbolzens 154c abgestützt ist.

An einem dem Achselement 32c zugewandten Ende des Achselements 30c ist eine Hülse 168c befestigt, in die der Innenbolzen 154c im montierten Zustand eingeschoben ist. Die Hülse 168c und/oder der Innenbolzen 154c könnte auch zumindest teilweise einstückig mit den Achselementen 30c, 32c ausgebildet sein.

Die Hülse 168c weist in einem Koppelbereich mit dem Achselement 30c einen größeren Außendurchmesser auf als das Achselement 30c und ist auf das Achselement 30c aufgeschoben.

In der Hülse 168c sind Außenringe der Lager 40c, 42c radial nach außen abgestützt. An einem dem Achselement 30c abgewandten Ende weist die Hülse 168c eine Schraubverbindung auf, und zwar ist am Ende der Hülse 168c eine Scheibe 170c angeschraubt, die den Außenringe des Lager 42c in Richtung des Achselements 30c belastet und auf diesen eine Spannkraft aufbringt. Die Spannkraft wird über einen Distanzaußenring 172c auf den Außenring des Lagers 40c übertragen, wobei der Außenring des Lagers 40c an einem Absatz 176c am Innenumfang der Hülse 168c abgestützt ist.

Die Achsvorrichtung weist ferner Pleueleinheiten 52c, 54c, 156c, 158c auf, die dazu vorgesehen sind, Schwenkbewegungen der Achselemente 26c, 28c, 30c, 32c gefedert und gedämpft mit weiteren Einheiten 160c, 162c zu koppeln. Die Einheiten 160c, 162c werden dabei von Querträgern gebildet, die zwischen Längsträgern 66c, 68c angeordnet sind. Die Pleueleinheiten 52c, 54c, 156c, 158c weisen Schraubendruckfedern und Gasdämpfer auf. Grundsätzlich sind jedoch auch andere, dem Fachmann als sinnvoll erscheinende Federn und Dämpfer denkbar, wie beispielsweise Luftfedern, Blattfedern, Öldämpfer usw.

### Bezugszeichen

- 10: Achsvorrichtung
- 12: Fahrzeug
- 14: Achse
- 16: Achse
- 18: Längslenker
- 20: Längslenker
- 22: Längslenker
- 24: Längslenker
- 26: Achselement
- 28: Achselement
- 30: Achselement
- 32: Achselement
- 34: Lagereinheit
- 36: Lagereinheit
- 38: Zugelement
- 40: Lager
- 42: Lager
- 44: Lagerstelle
- 46: Lagerstelle
- 48: Lagerstelle
- 50: Lagerstelle
- 52: Pleueleinheit
- 54: Pleueleinheit
- 56: Hauptfahrtrichtung
- 58: Fahrzeugabschnitt
- 60: Fahrzeugabschnitt
- 62: Achse
- 64: Fahrzeugführerkabine
- 66: Längsträger
- 68: Längsträger
- 70: Laufrad
- 72: Laufrad
- 74: Laufrad
- 76: Laufrad
- 78: Drehachse
- 80: Drehachse
- 82: Stütz- und Führungselement
- 84: Lagerteileinheit
- 86: Lagerteileinheit
- 88: Hülsenelement
- 90: Anschlussabschnitt
- 92: Lagerabschnitt
- 94: Wandung
- 96: Außenring
- 98: Innenring
- 100: Wälzkörper
- 102: Wälzkörper
- 104: Fixierelement
- 106: Fixierelement
- 108: Anschlagelement
- 110: Anschlagelement
- 112: Achslagereinheit
- 114: Achslagereinheit
- 116: Befestigungselement
- 118: Hebelelement
- 120: Hebelelement
- 122: Hebelelement
- 124: Hebelelement
- 126: Rohrelement
- 128: Rohrelement
- 130: Federelement
- 132: Stoßdämpfereinheit
- 134: Stoßdämpfereinheit
- 136: Strebe
- 138: Strebe
- 140: Wirkachse
- 142: Balgelement
- 144: Spanneinheit
- 146: Spannelement
- 148: Koppelbereich
- 150: Koppelbereich
- 152: Gewinde
- 154: Innenbolzen
- 156: Pleueleinheit
- 158: Pleueleinheit
- 160: Einheit
- 162: Einheit
- 164: Mutter
- 166: Distanzinnenring
- 168: Hülse
- 170: Scheibe
- 172: Distanzaußenring
- 174: Absatz
- 176: Absatz

## Patentansprüche

1. Achsvorrichtung für ein Fahrzeug (12a) insbesondere für ein Straßenfahrzeug, mit zumindest einer Achse (14a, 16a; 14b), die zumindest zwei Längslenker (18a, 20a, 22a, 24a; 18b, 20b) umfasst, die jeweils zu einer Lagerung eines Laufrads (70a, 72a, 74a, 76a) vorgesehen sind, sowie zumindest zwei Achselemente (26a, 28a, 30a, 32a; 26b, 28b), die jeweils drehfest mit einem der Längslenker (18a, 20a, 22a, 24a; 18b, 20b) verbunden sind, wobei die Achse (14a, 16a; 14b) zumindest eine Lagereinheit (34a, 36a; 34b) aufweist, die axial zwischen den Achselementen (26a, 28a, 30a, 32a; 26b, 28b) angeordnet ist, wobei die Lagereinheit (34c, 36c) eine Spanneinheit (144c) aufweist, die dazu vorgesehen ist, die Achselemente (26c, 28c, 30c, 32c) und/oder Lager (40c, 42c) der Lagereinheit (34c, 36c) zu verspannen, **dadurch gekennzeichnet, dass** die Spanneinheit (146c) einen Innenbolzen (154c) aufweist und der Innenbolzen (154c) ein im Koppelbereich (148c) der Achselemente (30c, 32c) angeordnetes Gewinde (152c) aufweist, über das zumindest ein Lager (40c, 42c) der Lagereinheit (36c) und/oder die Achselemente (30c, 32c) verspannbar sind, wobei zumindest ein Lager (40c, 42c) der Lagereinheit (36c) zumindest teilweise auf dem Innenbolzen (154c) angeordnet ist.

2. Achsvorrichtung nach einem der vorhergehenden Ansprüche, **dadurch gekennzeichnet, dass** die Lagereinheit (34, 36a; 34b) zumindest ein Lager (40a, 42a) aufweist, das als ein Schräglager ausgebildet ist.

3. Achsvorrichtung nach einem der vorhergehenden Ansprüche, **dadurch gekennzeichnet, dass** der Innenbolzen (154c) mit einem Achselement (32c) drehfest verbunden ist.

4. Achsvorrichtung nach einem der vorhergehenden Ansprüche, **gekennzeichnet durch** zumindest eine Lagerstelle (44a, 48a; 44b) zu einer direkten Lagerung eines ersten der Achselemente (26a, 30a; 26b) und zumindest eine weitere Lagerstelle (46a, 50a; 46b) zu einer direkten Lagerung eines weiteren der Achselemente (28a, 32a; 28b).

5. Achsvorrichtung nach Anspruch 4, **dadurch gekennzeichnet, dass** die Lagerstelle (44a, 48a; 44b) und die zumindest eine weitere Lagerstelle (46a, 50a; 46b) dazu vorgesehen sind, die Achselemente (26a, 28a, 30a, 32a; 26b, 28b) unabhängig voneinander zu lagern.

6. Achsvorrichtung nach einem der vorhergehenden Ansprüche, **gekennzeichnet durch** eine zweite Achse (16a), die zumindest zwei Längslenker (22a, 24a) umfasst, die jeweils zu einer Lagerung eines Laufrads vorgesehen sind, sowie zumindest zwei Achselemente (30a, 32a), die jeweils drehfest mit einem der Längslenker (22a, 24a) verbunden sind, wobei die Achse (16a) eine Lagereinheit (36a) aufweist, die axial zwischen den Achselementen (30a, 32a) der Achse (16a) angeordnet ist.

7. Achsvorrichtung nach einem der vorhergehenden Ansprüche, **gekennzeichnet durch** zumindest eine Pleueleinheit (52c, 54c, 156c, 158c), die dazu vorgesehen ist, eine Schwenkbewegung zumindest eines der Achselemente (26c, 28c, 30c, 32c) gefedert und/oder gedämpft mit zumindest einer weiteren Einheit (160c, 162c) zu koppeln.

8. Achsvorrichtung nach Anspruch 6 oder 7, **gekennzeichnet durch** zumindest eine elastisch verformbare Pleueleinheit (52a, 54a), die dazu vorgesehen ist, eine Schwenkbewegung eines der Achselemente (28a, 30a) einer ersten der Achsen (14a) mit einer Schwenkbewegung eines der Achselemente (28a, 32a) einer weiteren Achse (16a) zu koppeln.

9. Achsvorrichtung nach Anspruch 7 oder 8, **dadurch gekennzeichnet, dass** die zumindest eine Pleueleinheit (52a, 54a) zumindest ein Rückstellelement (130a) aufweist, das dazu vorgesehen ist, einer Verformung der Pleueleinheit (52a, 54a) entgegenzuwirken.

10. Fahrzeug, insbesondere Straßenfahrzeug, mit zumindest einer Achsvorrichtung (10a; 10b) nach einem der vorhergehenden Ansprüche.

## Claims

1. Axle device for a vehicle (12a), in particular for a road vehicle, with at least one axle (14a, 16a; 14b) comprising at least two longitudal controls (18a, 20a, 22a, 24a; 18b, 20b), which are respectively configured to bear a running wheel (70a, 72a, 74a, 76a), and at least two axle elements (26a, 28a, 30a, 32a; 26b, 28b), which are respectively connected to one of the longitudinal controls (18a, 20a, 22a, 24a; 18b, 20b) in a rotationally fixed manner,
the axle (14a, 16a; 14b) comprising at least one bearing unit (34a, 36a; 34b), which is arranged axially between the axle elements (26a, 28a, 30a, 32a; 26b, 28b),
the bearing unit (34c, 36c) comprising a tensioning unit (144c) that is configured for tensioning the axle elements (26c, 28c, 30c, 32c) and/or bearings (40c, 42c) of the bearing unit (34c, 36c),
**characterised in that** the tensioning unit (146c) comprises an inner bolt (154c) and the inner bolt (154c) has a thread (152c), which is arranged in the coupling region (148c) of the axle elements (30c, 32c) and via which at least one bearing (40c, 42c) of the bearing unit (36c) and/or the axle elements (30c, 32c) are/is tensionable, wherein at least one bearing (40c, 42c) of the bearing unit (36c) is arranged at least partly on the inner bolt (154c).

2. Axle device according to one of the preceding claims,
**characterised in that** the bearing unit (34a, 36a; 34b) comprises at least one bearing (40a, 42a) that is embodied as an angular contact bearing.

3. Axle device according to one of the preceding claims,
**characterised in that** the inner bolt (154c) is connected to an axle element (32c) in a rotationally fixed manner.

4. Axle device according to one of the preceding claims,
**characterised by** at least one bearing point (44a, 48a; 44b) for a direct support of a first one of the axle elements (26a, 30a; 26b) and at least one further bearing point (46a, 50a; 46b) for a direct support of another one of the axle elements (28a, 32a; 28b).

5. Axle device according to claim 4,
**characterised in that** the bearing point (44a, 48a; 44b) and the at least one further bearing point (46a, 50a; 46b) are configured to bear the axle elements (26a, 28a, 30a, 32a; 26b, 28b) independently from one another.

6. Axle device according to one of the preceding claims,
**characterised by** a second axle (16a) comprising at least two longitudinal controls (22a, 24a), which are respectively configured to bear a running wheel, and at least two axle elements (30a, 32a), which are respectively connected to one of the longitudinal controls (22a, 24a) in a rotationally fixed manner,
wherein the axle (16a) comprises a bearing unit (36a), which is arranged axially between the axle elements (30a, 32a) of the axle (16a).

7. Axle device according to one of the preceding claims, **characterised by** at least one connection rod unit (52c, 54c, 156c, 158c), which is configured to couple a pivot movement of at least one of the axle elements (26c, 28c, 30c, 32c) with at least one further unit (160c, 162c) in a spring-loaded and/or damped manner.

8. Axle device according to one claims 6 or 7, **characterised by** at least one elastically deformable connection rod unit (52a, 54a), which is configured to couple a pivot movement of one of the axle elements (28a, 30a) of a first one of the axis (14a) with a pivot movement of one of the axle elements (28a, 32a) of a further axle (16a).

9. Axle device according to one of claims 7 or 8, **characterised in that** the at least one connection rod unit (52a, 54a) comprises at least one reset element (130a), which is configured to act counter to a deformation of the connection rod unit (52a, 54a).

10. Vehicle, in particular road vehicle, with at least one axle device (10a; 10b) according to one of the preceding claims.

## Revendications

1. Dispositif d'essieu pour une véhicule (12), notamment pour une véhicule routier, avec au moins un essieu (14a, 16a ; 14b) comprenant au moins deux bras longitudinaux (18a, 20a, 22a, 24a ; 18b, 20b), qui sont respectivement prévus pour supporter une roue mobile (70a, 72a, 74a, 76a),
et au moins deux éléments d'essieu (26a, 28a, 30a, 32a ; 26b, 28b), qui sont respectivement raccordés avec l'un des bras longitudinaux (18a, 20a, 22a, 24a ; 18b, 20b),
l'essieu (14a, 16a ; 14b) comprenant au moins une unité palier (34a, 36a ; 34b) disposée axialement entre les éléments d'essieu (26a, 28a, 30a, 32a ; 26b, 28b), l'unité palier (34c, 36c) comprenant une unité de serrage (144c) prévue pour serrer les éléments d'essieu (26c, 28c, 30c, 32c) et/ou des paliers (40c, 42c) de l'unité palier (36c),
**caractérisé en ce que**
l'unité de serrage (146c) comporte un boulon intérieur (154c) et le boulon intérieur (154c) comporte un filetage (152c), lequel est disposé dans la région raccordant (148c) des éléments d'essieu (30c, 32c) et par le biais duquel au moins un palier (40c, 42c) de l'unité palier (36c) et/ou les éléments d'essieu (30c, 32c) peut/peuvent être serré/serrés,
au moins un palier (40c, 42c) de l'unité palier (36c) étant disposé au moins partiellement sur le boulon intérieur (154c).

2. Dispositif d'essieu selon l'une quelconque des revendications précédentes,
**caractérisé en ce que**
l'unité palier (34, 36a ; 34b) comporte au moins un palier (40a, 42a), qui est implémenté comme palier à contact oblique.

3. Dispositif d'essieu selon l'une quelconque des revendications précédentes,
**caractérisé en ce que**
le boulon intérieur (154c) est raccordé avec un élément d'essieu (32c) solidairement en rotation.

4. Dispositif d'essieu selon l'une quelconque des revendications précédentes,
**caractérisé par**
au moins un point de palier (44a, 48a ; 44b) pour un support direct d'un premier des éléments d'essieu (26a, 30a ; 26b) et
au moins un autre point de palier (46a, 50a ; 46b) pour un support direct d'un autre des éléments d'essieu (26a, 30a ; 26b).

5. Dispositif d'essieu selon la revendication 4,
**caractérisé en ce que**
le point de palier (44a, 48a ; 44b) et l'au moins un autre point de palier (46a, 50a ; 46b) sont configurés à supporter les éléments d'essieu (26a, 28a, 30a, 32a ; 26b, 28b) indépendamment l'un de l'autre.

6. Dispositif d'essieu selon l'une quelconque des revendications précédentes,
**caractérisé par**
un deuxième essieu (16a) comprenant au moins deux bras longitudinaux (22a, 24a), qui sont respectivement prévus pour supporter une roue mobile, et au moins deux éléments d'essieu (30a, 32a), qui sont respectivement raccordés avec l'un des bras longitudinaux (22a, 24a) solidairement en rotation, l'essieu (16a) comportant une unité palier (36a) disposée axialement entre les éléments d'essieu (30a, 32a) de l'essieu (16a).

7. Dispositif d'essieu selon l'une quelconque des revendications précédentes,
**caractérisé par**
au moins une unité bielle (52c, 54c, 156c, 158c), qui est prévue pour coupler, de façon suspendue ou amortie, un mouvement pivotant de l'au moins un des éléments d'essieu (26c, 28c, 30c, 32c) avec au moins une autre unité (160c, 162c).

8. Dispositif d'essieu selon l'une quelconque des revendications 6 ou 7,
**caractérisé par**
au moins une unité bielle (52a, 54a), qui est déformable élastiquement et est configurée pour coupler un mouvement pivotant de l'un des éléments d'essieu (28a, 30a) d'un premier des essieux (14a) avec un mouvement pivotant de l'un des éléments d'essieu (28a, 32a) d'un autre essieu (16a).

9. Dispositif d'essieu selon l'une quelconque des revendications 7 ou 8,
**caractérisé en ce que**
l'au moins une unité bielle (52a, 54a) comporte au moins un élément de rappel (130a) prévu pour agir contre une déformation de l'unité bielle (52a, 54a).

10. Véhicule, notamment véhicule routier, avec au moins un dispositif d'essieu (10a ; 10b) selon l'une quelconque des revendications précédentes.
